# EUROPEAN PATENT APPLICATION

(11) **EP 4 609 685 A1**
(43) Date of publication of application: **03.09.2025**
(21) Application number: 23882314.0
(22) Date of filing: 27.09.2023
(51) Int. Cl.: A01B 69/00

(54) **REMOTE OPERATION ASSISTANCE SYSTEM FOR WORK MACHINE AND REMOTE APPARATUS**

(30) Priority: 24.10.2022 JP 2022170009
(71) Applicant: KUBOTA CORPORATION, Osaka-shi, Osaka 556-8601 (JP)
(72) Inventor: TOKIEDA Yoshiki, Sakai-shi, Osaka 590-0908 (JP)
(74) Representative: Cabinet Beau de Loménie
(86) International application number: PCT/JP2023/035081
(87) International publication number: WO 2024/090104

(57) **Abstract**

To allow an operator to easily understand the positional relationship between a working machine (1) and a target.

A remote control assistance system (100) for a working machine (1) includes a sensor (25), and a remote apparatus (30) including a display (34) to display sensing information obtained through sensing by the sensor (25) and a controller (31) to control the display (34). The controller (31) is configured or programmed to cause the display (34) to display a sensing map (41) indicating a surrounding area of the working machine (1) and a caution zone (52, 53) in the surrounding area and, when the sensing information includes a target (61a, 61b, 61c) in the surrounding area of the working machine (1), cause the display (34) to display a target object (56a, 56b, 56c) indicating a position of the target (61a, 61b, 61c) on the sensing map (41).

## Description

### Technical Field

The present invention relates to a remote control assistance system for a working machine and a remote apparatus that assist a remote control of a working machine to travel.

### Background Art

PTL 1, for example, discloses a vehicle remote instruction system for an operator to remotely instruct a vehicle. This vehicle remote instruction system includes a display that displays information for the operator who remotely instructs the vehicle, an image displayer connected to the display, an external sensor that detects information regarding an environment outside the vehicle, and an internal sensor that detects travel conditions of the vehicle. The external sensor and the internal sensor are provided for the vehicle. The image displayer determines a position of the vehicle at a second time a predetermined period of time after a first time based on data detected by the internal sensor at the first time, displays a monitoring image indicating a surrounding area of the vehicle on the display based on data detected by the external sensor at the first time, and superimposes an object indicating the position of the vehicle at the second time upon the monitoring image at a corresponding position.

### Citation List

### Patent Literature

PTL 1: Japanese Unexamined Patent Application Publication No. 2021-18744

### Summary of Invention

### Technical Problem

When a monitoring image upon which a future position of a vehicle is superimposed is displayed on a display as in PTL 1, it is difficult for the operator to determine whether a target is at a position dangerous to the vehicle even if the operator looks at the monitoring image.

In view of the above problem, an object of the present invention is to enable an operator to easily understand the positional relationship between a working machine and a target.

### Solution to Problem

Technical solutions in the present invention to attain the above object include the following features.

A remote control assistance system for a working machine according to an example embodiment of the present invention includes a sensor, and a remote apparatus including a display to display sensing information obtained through sensing by the sensor and a controller to control the display, wherein the controller is configured or programmed to cause the display to display a sensing map indicating a surrounding area of the working machine and a caution zone in the surrounding area and, when the sensing information includes a target in the surrounding area of the working machine, cause the display to display a target object indicating a position of the target on the sensing map. The remote apparatus is included in a remote control assistance system according to the present invention

The controller may be configured or programmed to cause an emergency stop zone and a warning zone which are included in the caution zone to be displayed on the sensing map, the emergency stop zone being configured such that the working machine makes an emergency stop when a predetermined target is present in the emergency stop zone, the warning zone being configured such that a warning indicating that the predetermined target is approaching the working machine is issued when the predetermined target is present in the warning zone, and change a manner in which the target object is displayed, based on whether the target object is in the emergency stop zone, in the warning zone, or outside the emergency stop zone and the warning zone.

The controller may be configured or programmed to cause the target object in the warning zone to be displayed in a more emphasized manner than the target object outside the emergency stop zone and the warning zone, and cause the target object in the emergency stop zone to be displayed in a more emphasized manner than the target object in the warning zone.

A plurality of the sensors may be provided in or on the working machine and include a plurality of target sensors to detect targets located forward of, rearward of, leftward of, and rightward of the working machine. The controller may be configured or programmed to cause at least one monitored area of at least one of the target sensors that has detected at least one target to be displayed on the sensing map.

The remote control assistance system may further include a detector to detect a state of the working machine. The controller may be configured or programmed to change a manner in which the caution zone is displayed based on a travel speed of the working machine detected by the detector.

The controller may be configured or programmed to change a manner in which the caution zone is displayed based on specifications of a working device coupled to the working machine.

The controller may be configured or programmed to cause the caution zone, which is present in a direction of travel of the working machine detected by the detector, to be displayed on the sensing map.

The controller may be configured or programmed to change a position at which the caution zone is displayed based on a steering angle of the working machine detected by the detector.

The controller may be configured or programmed to predict a position of the working machine at a future time after a predetermined time period based on a travel direction and a travel speed of the working machine detected by the detector, and cause a predicted working machine object indicating the predicted position of the working machine at the future time after the predetermined time period and an actual working machine object indicating a current position of the working machine to be displayed on the sensing map.

The sensor may include an imager to capture an image of the surrounding area of the working machine. The controller may be configured or programmed to cause the display to display an image captured by the imager and the sensing map on a screen.

The imager may include a plurality of cameras provided in or on the working machine to capture images of areas forward of, rearward of, leftward of, and rightward of the working machine. The controller may be configured or programmed to cause the display to display at least one of (i) a plurality of captured images captured by the respective plurality of cameras or (ii) a composite image obtained by combining the plurality of captured images and indicating an overhead view of the surrounding area of the working machine.

The imager may include an internal camera provided inside a cabin of the working machine to capture an image of an area forward of the working machine. The controller may be configured or programmed to cause the display to display the image captured by the internal camera.

The sensor may include a target sensor to detect a distance from the working machine to the target. The controller may be configured or programmed to cause an indication object indicating the target shown in the captured image to be displayed and change a manner in which the indication object is displayed based on the distance to the target.

The controller may be configured or programmed to cause the indication object to be displayed in a more emphasized manner as the distance to the target indicated by the indication object decreases.

The controller may be configured or programmed to, when the target is hidden behind a portion of the working machine or a working device coupled to the working machine shown in the captured image, estimate a position of the target in the captured image based on detection information from the target sensor, and cause the indication object to be displayed based on the estimated position of the target.

The sensor may include a target sensor to detect a distance from the working machine to the target. The controller may be configured or programmed to determine a direction from which the target is approaching the working machine based on detection information from the target sensor, and cause a notification object which provides a notification that the target is approaching to be displayed at a position at a periphery of the captured image that corresponds to the direction from which the target is approaching, and change a manner in which the notification object is displayed based on the distance to the target.

The controller may be configured or programmed to cause additional information based on map information regarding the surrounding area of the working machine to be displayed on the sensing map.

The remote apparatus may include an input interface to receive input of an instruction to display at least one of a plurality of pieces of the additional information at least including an impassable zone and a ground level difference around the working machine. The controller may be configured or programmed to cause the display to display at least one of the pieces of additional information indicated by the instruction and the sensing map on a screen. Advantageous Effects of Invention

With the remote control assistance system for a working machine and a remote apparatus according to the present invention, an operator can easily understand the positional relationship between a working machine and a target.

### Brief Description of Drawings

[FIG. 1] FIG. 1 is a configuration diagram of a remote control assistance system for a working machine according to an embodiment of the present invention.
[FIG. 2] FIG. 2 is a side view of a tractor that is an example of the working machine.
[FIG. 3] FIG. 3 is a flowchart illustrating operation of the working machine and a remote apparatus.
[FIG. 4] FIG. 4 is a diagram illustrating an example of a remote monitoring screen.
[FIG. 5] FIG. 5 is an enlarged view of a sensing map.
[FIG. 6] FIG. 6 is a diagram illustrating a variation of the sensing map.
[FIG. 7] FIG. 7 is a diagram illustrating a variation of the sensing map.
[FIG. 8] FIG. 8 is a diagram illustrating a variation of the sensing map.
[FIG. 9] FIG. 9 is a diagram illustrating a variation of the sensing map.
[FIG. 10] FIG. 10 is a diagram illustrating a variation of the sensing map.
[FIG. 11] FIG. 11 is a diagram illustrating a variation of the sensing map.
[FIG. 12] FIG. 12 is a diagram illustrating an example of a message displayed in a remote monitoring screen.
[FIG. 13] FIG. 13 is a diagram illustrating an example of the remote monitoring screen.
[FIG. 14] FIG. 14 is a diagram illustrating an example of a message displayed in the remote monitoring screen.
[FIG. 15] FIG. 15 is a diagram illustrating additional information menu displayed in the remote monitoring screen.
[FIG. 16] FIG. 16 is a diagram illustrating an example of additional information displayed in the remote monitoring screen.
[FIG. 17] FIG. 17 is a diagram illustrating another example of the additional information displayed in the remote monitoring screen.

### Description of Embodiments

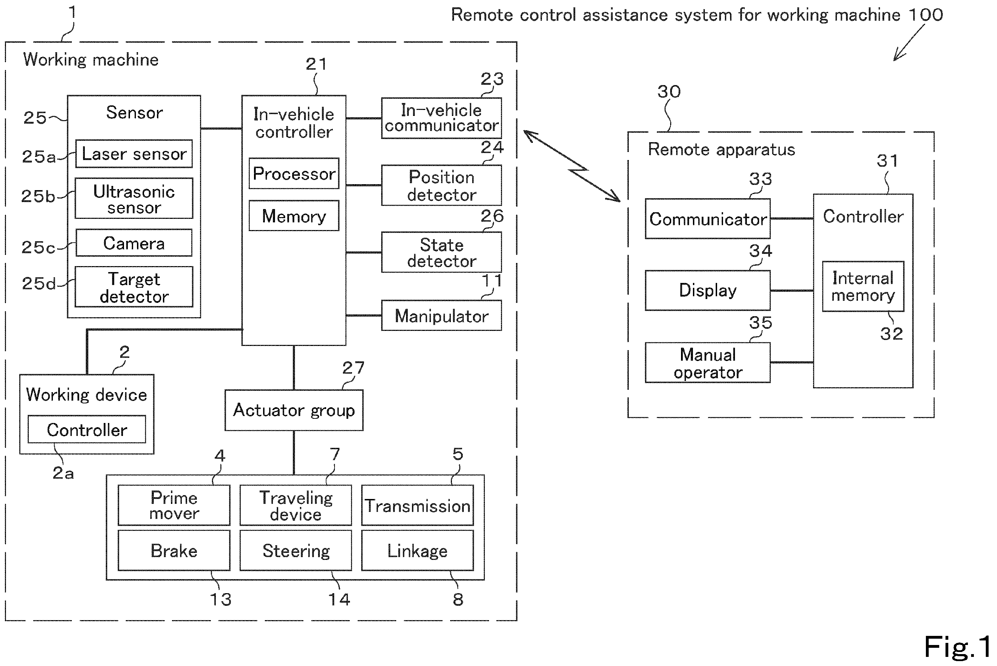

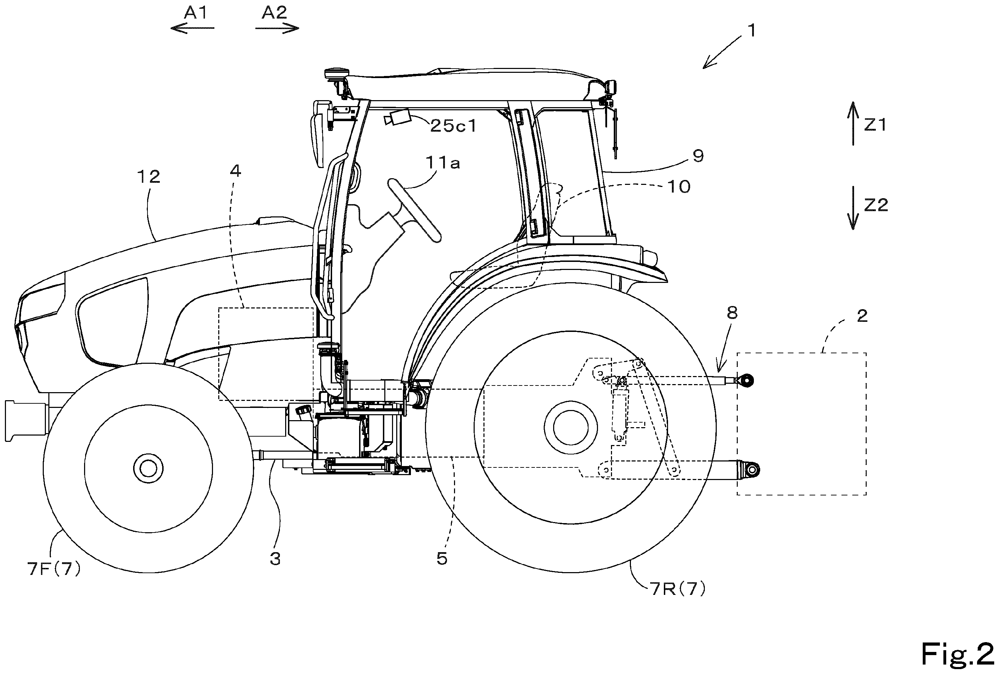

FIG. 1 is a configuration diagram of a remote control assistance system 100 for a working machine according to an embodiment of the present invention. The remote control assistance system 100 includes a remote apparatus 30. The remote control assistance system 100 and the remote apparatus 30 assist remote control of a working machine 1. The working machine 1 includes a self-propelled agricultural machine (also referred to as an "autonomous agricultural machine") or the like. In the present embodiment, the working machine 1 includes a tractor illustrated in FIG. 2. The tractor is an example of an agricultural machine that performs farm work in an agricultural field. Note that the working machine 1 may include an agricultural machine other than a tractor, a construction machine, or a working vehicle.

FIG. 2 is a side view of the tractor, which is an example of the working machine 1. Traveling devices 7 are provided for a vehicle body 3 of the working machine 1. The traveling devices 7 are provided on both sides of the vehicle body 3, and support the vehicle body 3 such that the vehicle body 3 is allowed to travel. The traveling devices 7 are wheeled traveling devices including front wheels 7F and rear wheels 7R that are tires. Traveling devices whose front wheels and rear wheels are crawlers may be used, instead.

The vehicle body 3 is provided with a prime mover 4, a transmission 5, brakes 13 (FIG. 1), and a steering 14 (FIG. 1). The prime mover 4 includes an engine (a diesel engine or a gasoline engine), an electric motor, or the like. The transmission 5 performs gear-shifting operations to change propelling force of the traveling devices 7 and switch the traveling devices 7 between forward travel and rearward travel. The brakes 13 brake the vehicle body 3. The steering 14 steers the vehicle body 3.

A cabin 9 is provided in an upper portion of the vehicle body 3. An operator's seat 10 and a manipulator 11 are provided inside the cabin 9. Although the working machine 1 is a tractor capable of traveling (operating) without an operator and performing work using a working device 2, it is also possible for an operator seated in the operator's seat 10 to operate the manipulator 11 to drive the working machine 1 and perform work with the working device 2. The cabin 9 surrounds the front, rear, top, and both sides of the operator's seat 10 to protect the operator's seat 10.

A direction indicated by an arrow A1 in FIG. 2 is the front of the working device 2. A direction indicated by an arrow A2 is the rear of the working device 2. A direction indicated by an arrow Z1 is the top of the working device 2. A direction indicated by an arrow Z2 is the bottom of the working device 2. A direction perpendicular to the arrows A1, A2, Z1, and Z2 is a width direction (lateral direction) of the working machine 1. A shallower side in FIG. 2 is the left of the working machine 1, and a deeper side is the right of the working machine 1.

A linkage 8 is provided in the rear of the vehicle body 3. The linkage 8 includes a three-point linkage. The working device (an implement etc.) 2 can be removably coupled to the linkage 8. By coupling the working device 2 with the linkage 8 and driving the traveling devices 7, the working machine 1 (vehicle body 3) travels to pull the working device 2. The linkage 8 can also raise and lower the working device 2 and change an attitude of the working device 2.

The working device 2 is a cultivator for cultivation, a fertilizer spreader for spreading fertilizer, an agricultural chemical spreader for spreading agricultural chemicals, a harvester for harvesting, a mower for mowing grass or the like, a tedder for tedding grass or the like, a rake for raking grass or the like, a baler for baling grass or the like, or the like. The working machine 1 performs farm work on the agricultural field using the working device 2.

A hood 12 is provided in front of the cabin 9. The hood 12 is attached to the vehicle body 3. A storage room (reference numeral omitted) is defined between the hood 12 and the vehicle body 3. The storage room stores not only the prime mover 4 but also a cooling fan, a radiator, a battery, and the like (not illustrated).

As illustrated in FIG. 1, the working machine 1 includes an in-vehicle controller 21, an in-vehicle communicator 23, a position detector 24, at least one sensor 25, a state detector 26, the manipulator 11, actuators (actuator group) 27, the prime mover 4, the traveling devices 7, the transmission 5, the brakes 13, the steering 14, and the linkage 8. A vehicle network such as CAN, LIN, or FlexRay is also constructed in the working machine 1. The in-vehicle communicator 23, the position detector 24, the at least one sensor 25, the state detector 26, the manipulator 11, the actuators 27, the working device 2 coupled to the working machine 1, and the like are electrically connected to the in-vehicle controller 21 via the vehicle network.

The in-vehicle controller 21 includes an ECU (electronic control unit) including a CPU and a memory. The in-vehicle controller 21 is a controller that controls operation of each component of the working machine 1. The memory of the in-vehicle controller 21 includes a volatile or nonvolatile memory or the like. The memory of the in-vehicle controller 21 stores, in a readable and writable manner, various types of information and data for the in-vehicle controller 21 to control the operation of each component of the working machine 1.

The in-vehicle communicator 23 includes an antenna for wireless communication over a cellular network, the Internet, or a wireless LAN, an IC, an electric circuit, and the like. The in-vehicle controller 21 wirelessly communicates with the remote apparatus 30 using the in-vehicle communicator 23.

Note that although the present embodiment illustrates an example in which the working machine 1 and the remote apparatus 30 communicate with each other over the cellular network or the like, the working machine 1 and the remote apparatus 30 may also communicate with each other over the cellular network or the like through, for example, an external device such as a server or a relay. The working machine 1 and the remote apparatus 30 may also directly communicate with each other using a short-range wireless signal such as a BLU (Bluetooth (registered trademark) Low Energy) signal or UHF (ultra high frequency) signal. In this case, an interface for the short-range wireless communication may be provided for each of the in-vehicle communicator 23 and the remote apparatus 30.

The position detector 24 is installed in an upper portion of the cabin 9 (FIG. 2) (details not illustrated). Note that an installation position of the position detector 24 is not limited to the upper portion of the cabin 9, and may be another position in the vehicle body 3 or a certain position in the working device 2. The position detector 24 detects the position thereof (measured position information including latitude and longitude) using a satellite positioning system. That is, the position detector 24 receives signal (positions of positioning satellites, transmission times, correction information, etc.) transmitted from positioning satellites, and detects the position thereof based on the signals. The position detector 24 may detect a position corrected based on a signal for correction or the like from a base station (reference state) capable of receiving signals from the positioning satellite.

In addition, the position detector 24 may include inertial measurement units such as a gyroscope sensor and an acceleration sensor. In this case, the position detector 24 may correct a position (latitude and longitude) detected based on a signal received from the positioning satellite using the inertial measurement devices, and detect a position obtained as a result of the correction as the position thereof. The position detector 24 determines the detected position thereof as a position of the working machine 1. Alternatively, the position detector 24 may calculate the position of the working machine 1 based on the detected position thereof and outer shape information regarding the working machine 1 stored in advance. Alternatively, the position detector 24 may calculate a position of the working device 2 based on the detected position thereof, outer shape information regarding the working device 2 stored in advance, and an installation position of the working device 2 with respect to the vehicle body 3.

The at least one sensor 25 senses (monitors) a surrounding area of the working machine 1. More specifically, the at least one sensor 25 includes a laser sensor 25a, an ultrasonic sensor 25b, at least one camera 25c, and a target detector 25d. The laser sensor 25a and the ultrasonic sensor 25b are installed at appropriate positions (details not illustrated) of the working machine 1, such as the front, rear, or left or right side, and detect conditions of a scene ahead of, behind, or to the left or right side of the working machine 1 and at least one target in the scene. For example, the laser sensor 25a and the ultrasonic sensor 25b are installed at predetermined positions on the vehicle body 3 from which even at least one target located at a position within a predetermined target detection distance from the working machine 1 and lower than the vehicle body 3 can be detected.

The laser sensor 25a and the ultrasonic sensor 25b are examples of a target sensor. Note that a plurality of at least the laser sensors 25a or the ultrasonic sensors 25b may be provided among the sensors 25 as target sensors. Additionally or alternatively, a plurality of other target sensors may be provided among the sensors 25.

The laser sensor 25a includes an optical sensor such as LiDAR (light detection and ranging). The laser sensor 25a radiates pulsed measurement light (laser light) from a light source such as a laser diode millions of times per second, performs scanning in a horizontal direction or a vertical direction by reflecting the measurement light with a rotating mirror, and projects the light onto a predetermined detection range (sensing range). The laser sensor 25a then receives reflected light of the measurement light from at least one target with a light receiving element.

The target detector 25d includes an electric circuit, an IC, or the like that detects presence or absence of at least one target, a position of the target, a type of target, and the like based on a light reception signal output from the light receiving element of the laser sensor 25a. The target detector 25d detects a distance to the at least one target based on time until reflected light is received after the laser sensor 25a radiates measurement light (TOF (time of flight) method). The at least one target detected by the target detector 25d includes sites where the working machine 1 travels and works, agricultural fields, crops in the agricultural fields, the ground, road surfaces, other targets, persons, and the like.

The ultrasonic sensor 25b includes an airborne ultrasonic sensor such as a sonar. The ultrasonic sensor 25b emits measurement waves (ultrasonic waves) onto a predetermined detection range using a wave transmitter, and receives reflected waves, which are the measurement waves reflected from targets, using a wave receiver. The target detector 25d detects presence or absence of at least one target, a position of the target, a type of target, and the like based on a signal output from the wave receiver of the ultrasonic sensor 25b. The target detector 25d also detects a distance to the at least one target based on time until a reflected wave is received after the ultrasonic sensor 25b emits a measurement wave (TOF method).

The at least one camera 25c includes a CCD camera provided with CCD (charge coupled devices) image sensors, a CMOS camera provided with CMOS (complementary metal oxide semiconductor) image sensors, or the like. The cameras 25c are installed at appropriate positions (details not illustrated) such as the front, rear, and the left and right sides of the working machine 1, an inside of the cabin 9, and the like, capture images of scenes ahead of, behind, and to the left or right sides of the working machine 1, and output data regarding the captured images. The cameras 25c are examples of an imager.

Among the plurality of camera 25c installed in the working machine 1, an internal camera 25c1 installed inside the cabin 9 illustrated in FIG. 2 captures an image of the scene ahead of the working machine 1 from the operator's seat 10. More specifically, the internal camera 25c1 captures an image of the scene ahead of the working machine 1 with the same field of view as the operator seated in the operator's seat 10. The target detector 25d is capable of detecting presence or absence of at least one target, a position of the target, a type of target, and the like based on data regarding captured images output from the cameras 25c.

The sensors 25 sense (monitor) surrounding conditions the working machine 1 and the working device 2 using the laser sensor 25a, the ultrasonic sensor 25b, the cameras 25c, and the target detector 25d, and output sensing information indicating a result to the in-vehicle controller 21. The sensing information includes at least detection information from the target detector 25d and data regarding images captured by the cameras 25c, but may also include detection information from the laser sensor 25a and the ultrasonic sensor 25b.

The state detector 26 detects operation states of the working machine 1 and the working device 2. Specifically, the state detector 26 includes various sensors installed for the components of the working machine 1 and the working device 2 and a processor, and the processor detects (determines) the operation states of the working machine 1 and the working device 2 based on signals output from the various sensors. The states of the working machine 1 detected by the state detector 26 include a drive or stop state of each component of the working machine 1, a travel direction, a travel speed, acceleration, and an attitude of the working machine 1, and the like. The states of the working device 2 detected by the state detector 26 include a drive or stop state and an attitude of the working device 2 and the like.

The state detector 26 may obtain, at predetermined time intervals, a position of the vehicle body 3 (the position of the working machine 1) detected by the position detector 24, detect (calculate) the position of the working device 2 from the position of the vehicle body 3, and detect changes (transitions) in the position of the vehicle body 3. The state detector 26 may also detect travel speed of the vehicle body 3 from the changes in the position of the vehicle body 3. In another example, a rotational speed sensor that detects a rotational speed of the wheels 7F and 7R of the traveling devices 7 or a rotational speed of a drive motor that rotates the wheels 7F and 7R may be provided, and the state detector 26 may detect the travel speed of the vehicle body 3 based on a signal output from the rotational speed sensor of the state detector 26.

The state detector 26 generates detection information indicating the detected operation states of the working machine 1 and the working device 2 and outputs the detection information to the in-vehicle controller 21. The position detector 24 and the state detector 26 are examples of a detector that detects the states of the working machine 1.

The position detector 24 and the state detector 26 output, as needed, detection information indicating results detected at the predetermined time intervals or predetermined timings to the in-vehicle controller 21. The sensors 25 also output, as needed, sensing information indicating results of sensing at predetermined time intervals or predetermined timings to the in-vehicle controller 21. The in-vehicle controller 21 stores the detection information and the sensing information input from the position detector 24, the state detector 26, and the sensors 25 in an internal memory. The in-vehicle controller 21 also transmits the detection information from the position detector 24 and the state detector 26 and the sensing information from the sensors 25 stored in the internal memory to the remote apparatus 30 at predetermined timings using the in-vehicle communicator 23.

The actuators 27 include an electric or hydraulic motor, a cylinder, a control valve, and the like for activating the components of the working machine 1, such as the prime mover 4, the traveling devices 7, the transmission 5, the brakes 13, and the linkage 8. The manipulator 11 includes a steering wheel 11a (FIG. 2), an accelerator pedal, a brake pedal, a gear shift lever, and the like. By activating predetermined ones of the actuators 27 in accordance with an operation state of the manipulator 11, the in-vehicle controller 21 drives the prime mover 4, the traveling devices 7, the transmission 5, the brakes 13, and the steering 14 to control travel and steering of the working machine 1.

The in-vehicle controller 21 also communicates with a controller 2a included in the working device 2 and causes the controller 2a to control the operation of the working device 2. That is, the in-vehicle controller 21 performs work on the agricultural field by controlling the operation of the working device 2 via the controller 2a. Note that some working devices 2 couplable with the working machine 1 do not include the controller 2a. In this case, the in-vehicle controller 21 controls the attitude of the working device 2 using the linkage 8 and performs work on the agricultural field using the working device 2.

The in-vehicle controller 21 controls the travel of the working machine 1, the work by the working device 2, and other operations of the working machine 1 based on the sensing information from the sensors 25, the detection information from the state detector 26, the detection information from the position detector 24, and the like. In addition, when the in-vehicle communicator 23 receives a remote control signal transmitted from the remote apparatus 30, the in-vehicle controller 21 controls the travel of the working machine 1, the work by the working device 2, and the other operations of the working machine 1 based on the remote control signal in addition to the above information.

Furthermore, when controlling the travel of the working machine 1 or the work by the working device 2, the in-vehicle controller 21 determines, from the detection information from the target detector 25d, whether a target has come to a position within a predetermined distance from the working machine 1 or the working device 2 and can contact the working machine 1 or the working device 2. If determining that a target has come to a position within the predetermined distance from the working machine 1 or the working device 2 and can contact the working machine 1 or the working device 2, the in-vehicle controller 21 controls the traveling devices 7, the working device 2, or the like to automatically stop the travel or work of the working machine 1 and avoid contact with the target.

The remote apparatus 30 includes a portable terminal apparatus such as a tablet apparatus or a smartphone or a stationary computer installed in a base station (not illustrated). In the present embodiment, the remote apparatus 30 includes a remote control monitor that remotely controls and monitors the working machine 1. That is, the operator remotely controls the working machine 1 and monitors the surrounding conditions of the working machine 1 using the remote apparatus 30. Note that, in another example, the remote apparatus 30 may include a remote monitor that remotely monitors the working machine 1, and a remote control apparatus for remotely operating the working machine 1 may be provided separately from the remote apparatus 30.

As illustrated in FIG. 1, the remote apparatus 30 includes a controller 31, a communicator 33, a display 34, and a manual operator 35. The controller 31 includes a CPU or the like. The controller 31 is a processor that controls operation of each component of the remote apparatus 30. An internal memory 32 provided for the controller 31 is a volatile or nonvolatile memory. The internal memory 32 stores, in a readable and writable manner, various types of information and data for the controller 31 to control the operation of each component of the remote apparatus 30.

The communicator 33 includes an antenna, an IC, an electric circuit, and the like for wireless communication over a cellular network, the Internet, or a wireless LAN. The controller 31 wirelessly communicates with the working machine 1 using the communicator 33.

The display 34 includes, for example, a liquid crystal display or the like. The display 34 displays information for remotely operating the working machine 1. The manual operator 35 includes a touch pad, hardware switches, or the like. By operating the manual operator 35, the operator can remotely control the travel of the working machine 1 or the work by the working device 2 and monitor the working machine 1 and the surrounding conditions of the working machine 1 using the display 34. The operator can also input predetermined information or instructions to the remote apparatus 30 by operating the manual operator 35.

The manual operator 35 is an example of an input interface. In addition, the display 34 and the manual operator 35 are examples of a user interface. In another example, a user interface in which a display and an manual operator are integrated together, such as a touch panel, may be provided for the remote apparatus 30 instead of the display 34 and the manual operator 35.

When the operator inputs an operation instruction for the working machine 1 by operating the manual operator 35, the controller 31 generates a remote control signal corresponding to the operation instruction and transmits the remote control signal to the working machine 1 using the communicator 33. Upon receiving the remote control signal from the remote apparatus 30 using the in-vehicle communicator 23, the in-vehicle controller 21 of the working machine 1 operates each component of the working machine 1 based on the remote control signal, the detection information from the position detector 24, the sensing information from the sensors 25, and the detection information from the state detector 26 to control the travel and steering of the working machine 1 and work operations by the working device 2.

The in-vehicle controller 21 also transmits the detection information from the position detector 24 and the state detector 26 and the sensing information from the sensors 25 to the remote apparatus 30 using the in-vehicle communicator 23. Upon receiving the detection information from the position detector 24 and the state detector 26 and the sensing information from the sensors 25 using the communicator 33, the controller 31 of the remote apparatus 30 stores the information in the internal memory 32 and displays the information on the display 34.

The controller 31 also displays, on the display 34, a sensing map indicating the surrounding area of the working machine 1 and at least one caution zone in the area based on the sensing information from the sensors 25 or the like as described later. In addition, if the sensing information includes a predetermined target in the surrounding area of the working machine 1, the controller 31 displays a target object indicating a position of the target on the sensing map. At this time, the controller 31 displays the target object on the sensing map in a mode corresponding to a position relative to a caution zone. The controller 31 further displays, using the display 34, images captured by the plurality of cameras 25c included in the sensing information on the same screen as the sensing map.

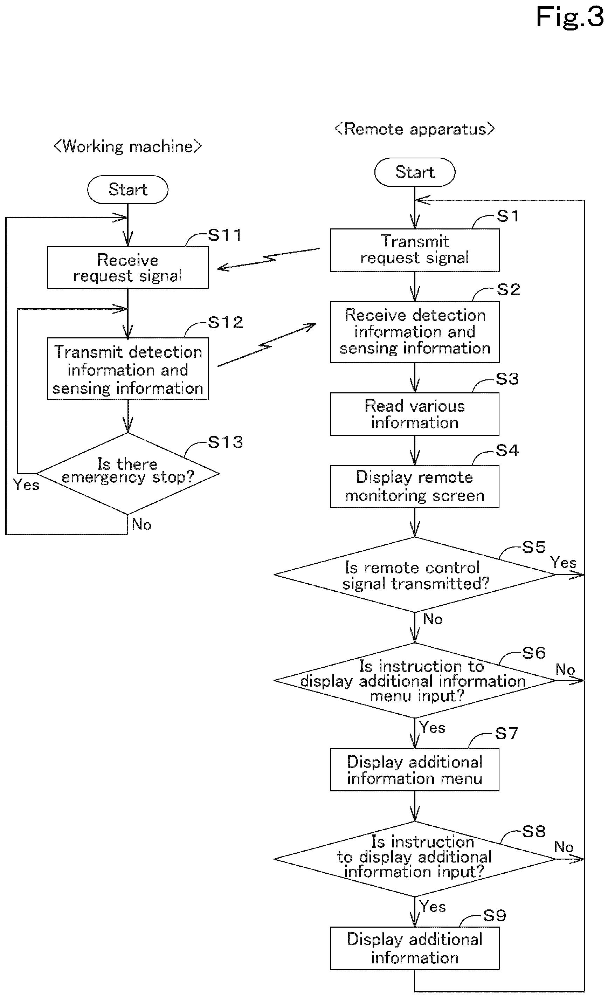

FIG. 3 is a flowchart illustrating the operation of the working machine 1 and the remote apparatus 30. Upon activation of the remote apparatus 30, the controller 31 transmits, to the working machine 1 using the communicator 33, a request signal for requesting information detected in the working machine 1 (S1). Upon receiving the request signal from the remote apparatus 30 using the in-vehicle communicator 23 (S11), the in-vehicle controller 21 of the working machine 1 transmits the detection information from the position detector 24 and the state detector 26 and the sensing information from the sensors 25 to the remote apparatus 30 using the in-vehicle communicator 23 (S12).

Upon reviving the detection information from the position detector 24 and the state detector 26 and the sensing information from the sensors 25 using the communicator 33 (S2), the controller 31 of the remote apparatus 30 stores the information in the internal memory 32. The controller 31 also reads the detection information from the position detector 24 and the state detector 26, the sensing information from the sensors 25, apparatus information indicating specifications of the working machine 1 and the working device 2, and map information regarding the surrounding area of the working machine 1 stored in the internal memory 32 (S3). The controller 31 then displays a remote monitoring screen on the display 34 based on the detection information from the position detector 24 and the state detector 26, the sensing information from the sensors 25, the apparatus information, and the map information (S4).

Note that the internal memory 32 stores in advance map information regarding a region in which the working machine 1 is located. The controller 31 extracts, in S3, the position of the working machine 1 from the detection information from the position detector 24, determines an area within a predetermined distance from the position of the working machine 1 as the surrounding area of the working machine 1, and reads map information regarding the area from the internal memory 32. In another example, the controller 31 may receive, in S3, the map information regarding the area within the predetermined distance from the position of the working machine 1 from an external server via the Internet using the communicator 33 and read the received map information.

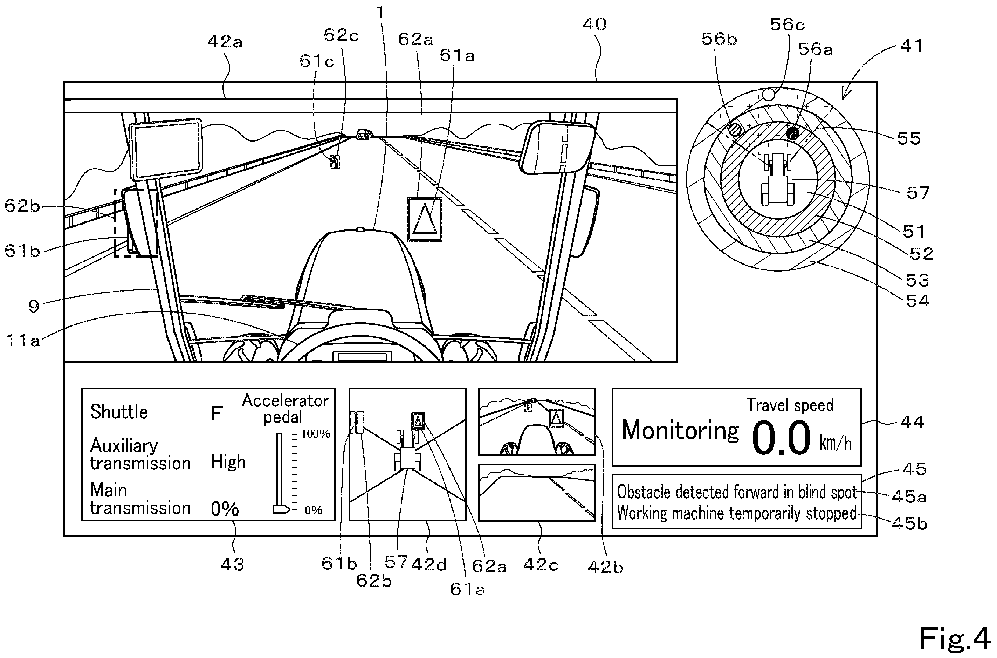

FIG. 4 is a diagram illustrating an example of a remote monitoring screen 40 displayed on the display 34. In the remote monitoring screen 40, a sensing map 41 and captured images 42a to 42d indicating the surrounding conditions of the working machine 1 and windows 43, 44, and 45 indicating the states of the working machine 1 are displayed.

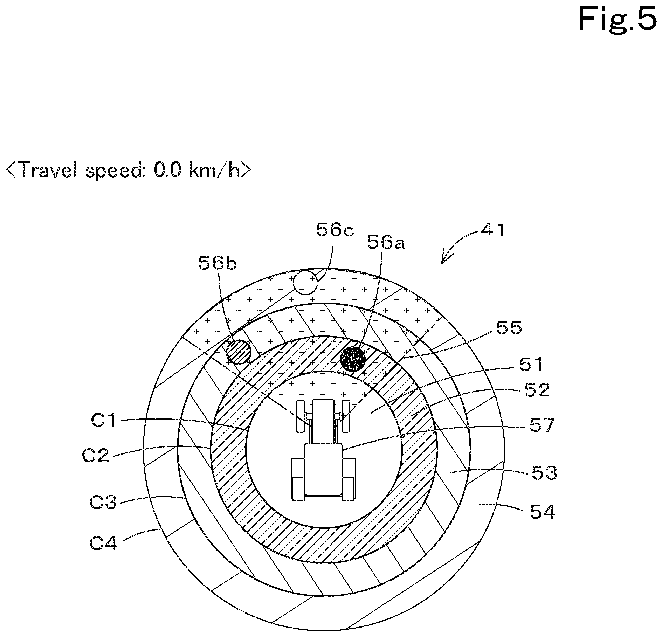

FIG. 5 is an enlarged view of an example of the sensing map 41. The controller 31 displays the sensing map 41 showing an actual working machine object 57 indicating a current position of the working machine 1, the surrounding area of the working machine 1, and caution zones 52 and 53 in the area in the remote monitoring screen 40 using the display 34 based on the sensing information from the sensors 25, the image information stored in the internal memory 32, and the like. The controller 31 also displays, on the sensing map 41, target objects 56a to 56c indicating positions of predetermined targets around the working machine 1. The predetermined targets include obstacles, such as persons or objects, that obstruct the travel of the working machine 1 and that the working machine 1 avoids contact with. The predetermined targets will be referred to as "obstacles" hereinafter.

The controller 31 also displays an emergency stop zone 52 and a warning zone 53 on the sensing map 41 as the caution zones 52 and 53. The emergency stop zone 52 is a zone for automatically performing an emergency stop of the working machine 1 if there is an obstacle. The warning zone 53 is a zone for warning of an obstacle approaching the working machine 1 if there is an obstacle. The emergency stop zone 52 and the warning zone 53 are set in advance at positions predetermined distances away from the working machine 1.

When the target detector 25d (FIG. 1) detects that there is an obstacle in the emergency stop zone 52, the in-vehicle controller 21 of the working machine 1 controls the traveling devices 7, the brakes 13, and the like to perform an emergency stop of the working machine 1 (vehicle body 3) (a temporary stop in the case of remote control). In addition, when the target detector 25d detects that there is an obstacle in the warning zone 53, the in-vehicle controller 21 activates a horn, a buzzer, or the like provided for the working machine 1 to warn of the obstacle approaching the working machine 1.

In addition, when it is recognized from the sensing information from the sensors 25 that there is an obstacle in the warning zone 53, the controller 31 of the remote apparatus 30 may display, in the remote monitoring screen 40 or the like using the display 34, warning information indicating the obstacle approaching the working machine 1. Alternatively, the controller 31 may output the warning information from a speaker provided for the remote apparatus 30 as a sound or a voice or from a vibrator provided for the remote apparatus 30 as a vibration operation.

The controller 31 of the remote apparatus 30 displays not only the emergency stop zone 52 and the warning zone 53 but also an inner zone 51, an outer zone 54, and a monitored area 55 on the sensing map 41. For example, the controller 31 determines a zone defined by a circumference C1 with a predetermined first radius from the center of the working machine 1 (vehicle body 3) as the inner zone 51, and displays the actual working machine object 57 in the inner zone 51. An area on the circumference C1 is included in the inner zone 51. In portions of the inner zone 51 ahead of and behind the actual working machine object 57 to which the working machine 1 can travel, the working machine 1 might not be able to stop and might travel to the emergency stop zone 52 depending on the travel speed of the working machine 1, even if the in-vehicle controller 21 performs emergency braking of the working machine 1.

The controller 31 also determines a zone defined by the circumference C1 with the first radius from the center of the working machine 1 and a circumference C2 with a predetermined second radius larger than the first radius as the emergency stop zone 52. An area on the circumference C2 is included in the emergency stop zone 52. The controller 31 sets a minimum value of braking distance in a case where the working machine 1 travels at a travel speed within a predetermined range as the radius of the circumference C1, and a maximum value of the braking distance as the radius of the circumference C2.

The controller 31 also determines a zone defined by the circumference C2 with the second radius from the center of the working machine 1 and a circumference C3 with a third radius larger than the second radius as the warning zone 53. An area on the circumference C3 is included in the warning zone 53. The controller 31 also determines a zone defined by the circumference C3 with the third radius from the center of the working machine 1 and a circumference C4 with a fourth radius larger than the third radius as the outer zone 54. An area on the circumference C4 is included in the outer zone 54.

Information regarding lengths of the circumferences C1 to C4 defining perimeters of the zones 51 to 54 and the like is set in advance in accordance with the specifications of the working machine 1, such as an external size and travel performance, and stored in the internal memory 32 of the remote apparatus 30 and the memory of the in-vehicle controller 21 of the working machine 1.

In addition, the controller 31 displays the target objects 56a to 56c indicating the positions of the obstacles detected by at least one of the plurality of laser sensors 25a and ultrasonic sensors 25b provided for the working machine 1 on the sensing map 41 as circles smaller than the actual working machine object 57. The controller 31 also displays the monitored area 55 of at least one sensor among the plurality of laser sensors 25a and ultrasonic sensors 25b that has detected the obstacles corresponding to the target objects 56a to 56c on the sensing map 41 in a fan shape. In addition, the controller 31 may set a maximum value of distance with which the plurality of laser sensors 25a and ultrasonic sensors 25b provided for the working machine 1 can detect an obstacle as the radius of the circumference C4 defining the perimeter of the outer zone 54.

In addition, the controller 31 displays the zones 51 to 55 on the sensing map 41 in different appearances such as different colors or patterns. In the example in FIG. 4, the zones 51 to 55 are displayed in hatching, a pattern, or outline to appear differently.

The controller 31 displays the emergency stop zone 52 and the warning zone 53 in such a way as to emphasize the appearance of the emergency stop zone 52 over that of the warning zone 53. The controller 31 also displays the warning zone 53 and the outer zone 54 in such a way as to emphasize the appearance of the warning zone 53 over that of the outer zone 54. Specifically, for example, the controller 31 displays the zones 52 to 54 on the sensing map 41 such that display colors become more vivid, patterns become denser, or luminance becomes higher in order of the outer zone 54, the warning zone 53, and the emergency stop zone 52.

The controller 31 displays the monitored area 55 translucently so that the other zones 51 to 54 overlapping the monitored area 55 are visible. Although the inner zone 51 is displayed in outline in the example in FIG. 4, the controller 31 may display the inner zone 51 in such a way as to emphasize the appearance of the inner zone 51 over that of the emergency stop zone 52.

The controller 31 displays the target objects 56a to 56c on the sensing map 41 in modes corresponding to positions relative to the emergency stop zone 52 and the warning zone 53. More specifically, the controller 31 changes the mode in which each of the target objects 56a to 56c is displayed based on whether the target objects 56a to 56c are in the emergency stop zone 52 or the warning zone 53, or outside the emergency stop zone 52 and the warning zone 53 (outer zone 54).

More specifically, as illustrated in FIG. 4, the controller 31 changes colors, patterns, luminance, brightness, saturation, sizes, shapes, or the like of the target objects 56b and 56c in such a way as to emphasize the target objects 56b displayed in the warning zone 53 over the target object 56c displayed in the outer zone 54. The controller 31 also changes colors, patterns, luminance, brightness, saturation, sizes, shapes, or the like of the target objects 56a and 56b in such a way as to emphasize the target object 56a displayed in the emergency stop zone 52 over the target object 56b displayed in the warning zone 53.

More specifically, for example, the controller 31 displays the target objects 56a to 56c on the sensing map 41 such that display colors become more vivid, patterns become denser, or luminance becomes higher in order of the target objects 56a, 56b, and 56c. For example, the controller 31 may display the target object 56a in red, the target object 56b in green (or yellow), the target object 56c in black (or green).

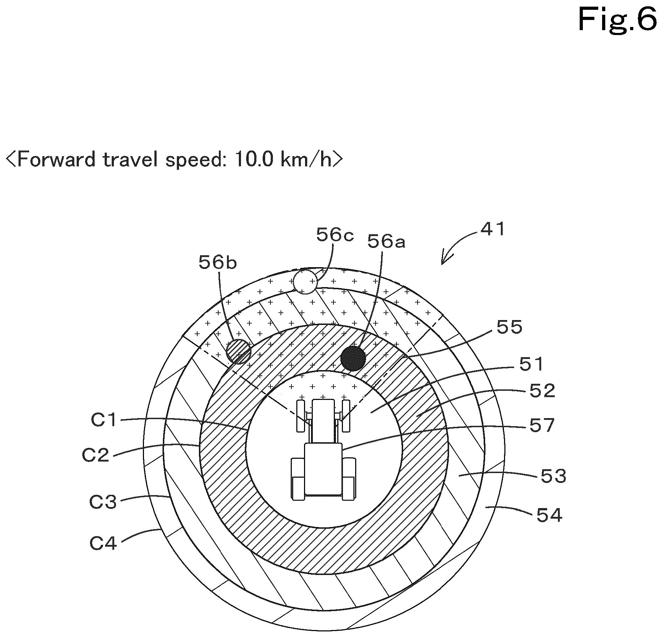

The controller 31 may also change the manner in which the emergency stop zone 52 and the warning zone 53 are each displayed based on the travel speed of the working machine 1 included in the detection information from the state detector 26. Specifically, as illustrated in FIGS. 5 and 6, for example, the controller 31 enlarges the circumferences C2 and C3 to increase the emergency stop zone 52 and the warning zone 53 in size as the travel speed of the working machine 1 increases. FIG. 5 illustrates a sensing map 41 at a time when the travel speed of the working machine 1 is 0.0 km/h, and FIG. 6 illustrates a sensing map 41 at a time when the travel speed of the working machine 1 is 10.0 km/h.

In another example, the controller 31 may enlarge the emergency stop zone 52 and the warning zone 53 in the travel direction of the working machine 1 as the travel speed of the working machine 1 increases. Alternatively, the controller 31 may enlarge the circumferences C1 and C4 to increase the inner zone 51 and the outer zone 54 in size as the travel speed of the working machine 1 increases.

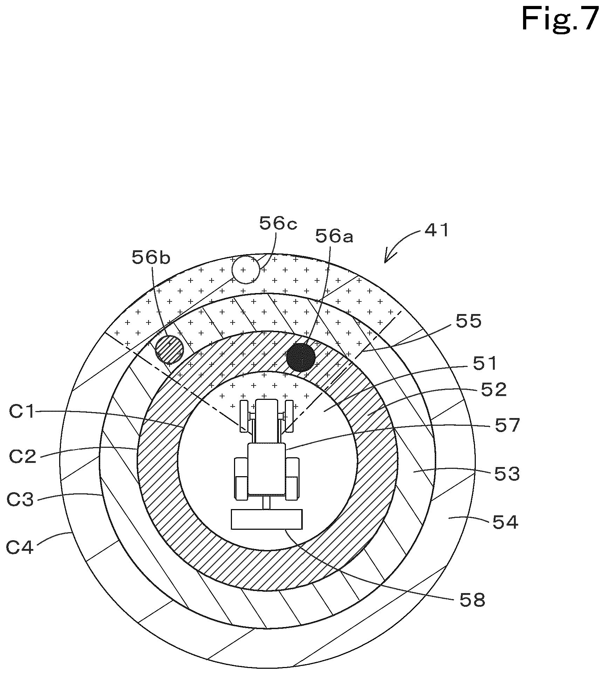

In addition, when the working device 2 is coupled to the working machine 1, for example, the controller 31 may change the manner in which the emergency stop zone 52 and the warning zone 53 are each displayed based on the specifications of the working device 2. More specifically, for example, the controller 31 checks, based on the detection information from the state detector 26, whether the working device 2 is coupled to the working machine 1 and, if the working device 2 is coupled to the working machine 1, extracts an external size (specifications) of the working device 2 from the apparatus information read from the internal memory 32. The controller 31 then displays, as illustrated in FIG. 7, a working device object 58 indicating the working device 2 on the sensing map 41 along with the actual working machine object 57 and changes the manner in which the inner zone 51 is displayed, the manner in which the emergency stop zone 52 is displayed, the manner in which the warning zone 53 is displayed, and the manner in which the outer zone 54 is displayed based on the external size of the working device 2.

More specifically, the controller 31 enlarges the circumferences C1, C2, and C3 to increase the inner zone 51, the emergency stop zone 52, and the warning zone 53 in size as the external size of the working device 2 increases. In addition, the controller 31 may enlarge the circumference C4 to increase the outer zone 54 in size as the external size of the working device 2 increases. In addition, the controller 31 may change shapes of the zones 51 to 54 in accordance with the external size of the working device 2.

Furthermore, the controller 31 may change the shapes of the zones 51 to 54 in accordance with a type of working device 2. Depending on the type of working device 2, an equipped working member might be exposed. When a working device 2 whose working member is exposed is coupled to the working machine 1, therefore, the controller 31 may, for example, increase the emergency stop zone 52 and the warning zone 53 in size compared to when a working device 2 whose working member is not exposed is not coupled to the working machine 1.

Although the perimeters (circumferences C1 to C4) of the zones 51 to 54 on the sensing map 41 are circles in the examples in FIGS. 4 to 7, shapes of the perimeters are not limited to this. For example, the controller 31 may change the shapes of the perimeters of the zones 51 to 54 based on the specifications of the working machine 1 included in the apparatus information read from the internal memory 32.

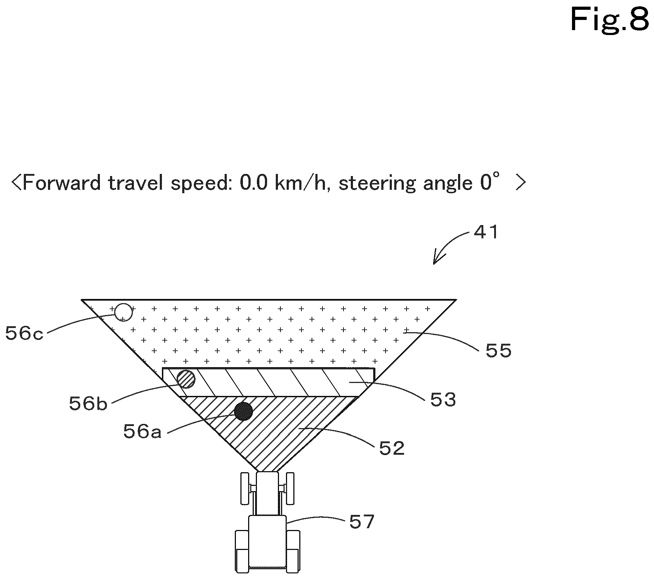

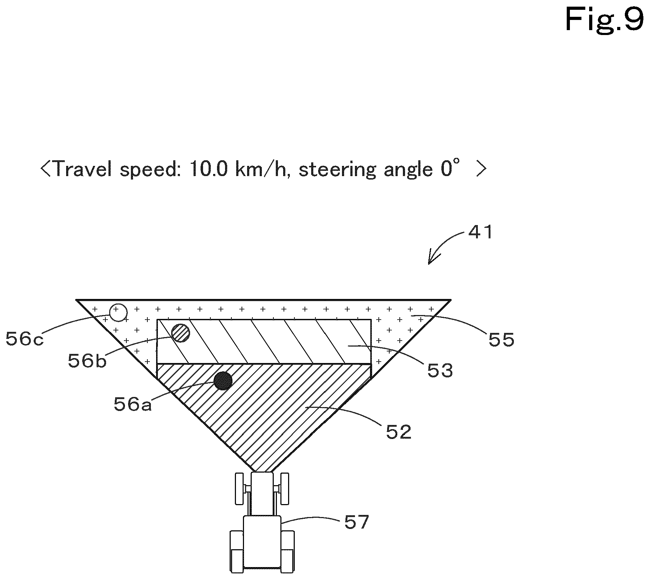

In addition, as illustrated in FIG. 8, for example, the controller 31 may display, on the sensing map 41, the emergency stop zone 52 and the warning zone 53 in the travel direction of the working machine 1 included in the detection information from the state detector 26. In the example in FIG. 8, the emergency stop zone 52, the warning zone 53, and the monitored area 55 within a predetermined forward range in which the forward-moving working machine 1 can travel are displayed on the sensing map 41 as a triangle, a rectangle, or a pentagon. In this case, too, the controller 31 may, as illustrated in FIGS. 8 and 9, enlarge the emergency stop zone 52 and the warning zone 53 forward as the travel direction of the working machine 1 increases.

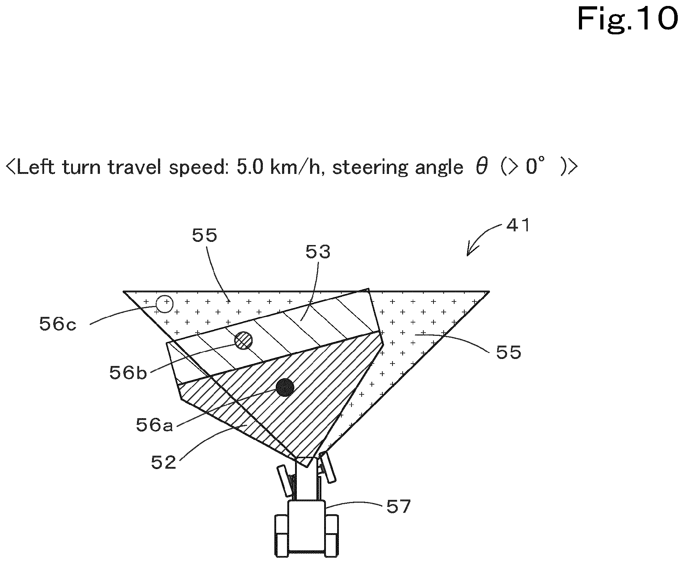

In addition, as illustrated in FIGS. 8 to 10, the controller 31 may change the display positions of the emergency stop zone 52 and the warning zone 53 in accordance with a steering angle θ of the working machine 1 included in the detection information from the state detector 26. As illustrated in the examples in FIGS. 8 to 10, the controller 31 rotates the emergency stop zone 52 and the warning zone 53 and changes the emergency stop zone 52 in size in accordance with the steering angle θ of the front wheels 7F of the working machine 1 to direct the emergency stop zone 52 and the warning zone 53 in a steering direction of the working machine 1.

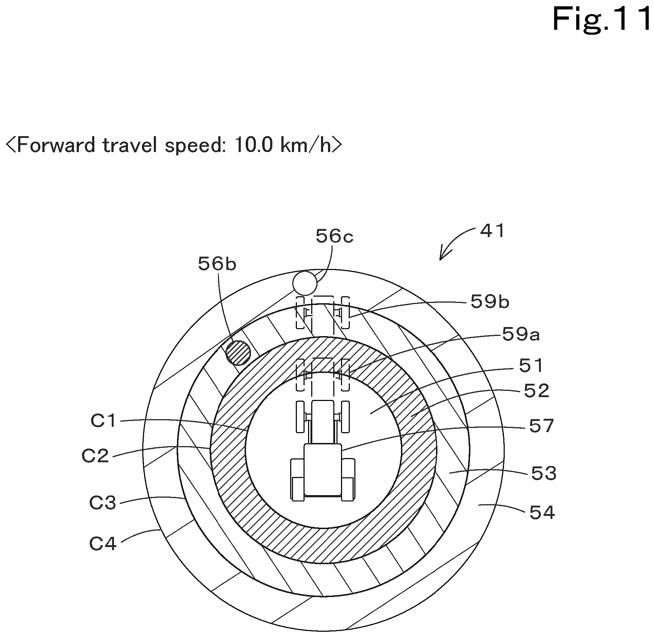

In addition, the controller 31 may predict the position(s) of the working machine 1 at future time(s) after predetermined time period(s) based on the travel direction and travel speed of the working machine 1 included in the detection information from the state detector 26 and, as illustrated in FIG. 11, display predicted working machine object(s) 59a and 59b indicating the position(s) of the working machine 1 at the future time(s) after the predetermined time period(s) on the sensing map 41. Since the working machine 1 is traveling forward in the example in FIG. 11, the estimated working machine objects 59a and 59b indicate external lines of the front of the working machine 1. In addition, the predicted working machine object 59a indicates the predicted position of the working machine 1 in three seconds, and the predicted working machine object 59b indicates the predicted position of the working machine 1 in six seconds. The elapsed periods of time for which the positions of the working machine 1 are predicted and the number of predicted working machine objects 59a and 59b are not limited to those described above, and may be appropriately set by the operator using the manual operator 35.

As illustrated in FIG. 4, the controller 31 displays the captured images 42a to 42d captured by the plurality of cameras 25c provided for the working machine 1 in the remote monitoring screen 40 using the display 34. More specifically, the controller 31 displays, in the remote monitoring screen 40, the captured image 42a captured by the internal camera 25c1 (FIG. 2), which captures an image of a scene ahead of the working machine 1 from above the operator's seat 10 installed inside the cabin 9. The captured image 42 shows a portion of the cabin 9, the front of the working machine 1, and a surrounding environment ahead of the working machine 1.

The controller 31 also displays, in the remote monitoring screen 40, the captured image 42b captured by the forward camera 25c that captures the scene ahead of the working machine 1. The captured image 42b shows the front of the working machine 1 and the surrounding environment ahead of the working machine 1 (reference numerals omitted). In another example, the controller 31 may generate, based on the captured image 42a captured by the internal camera 25c1, a captured image showing the scene ahead of the working machine 1 viewed from outside the cabin 9, and display the captured image in the remote monitoring screen 40.

The controller 31 also displays, in the remote monitoring screen 40, the captured image 42c captured by the camera 25c that captures an image of a scene behind the working machine 1. The captured image 42c shows a surrounding environment behind the working machine 1. Furthermore, the controller 31 combines captured images of scenes ahead of, behind, to the left, and to the right of the working machine 1 captured by the plurality of cameras 25c to display, in the remote monitoring screen 40, a composite captured image (a so-called around view monitor) 42d showing an overhead view of the surrounding area of the working machine 1. The captured image 42d shows the actual working machine object 57 and the surrounding environment of the working machine 1.

The controller 31 displays, among the plurality of captured images 42a to 42d, the captured image 42a of the scene ahead of the operator's seat 10 most largely, and displays the captured image 42d, which is the overhead view, more largely than the captured image 42b of the scene ahead and the captured image 42c of the scene behind.

In addition, the controller 31 finds obstacles 61a, 61b, and 61c shown in the captured images 42a to 42d, and displays indication objects 62a, 62b, and 62c indicating the obstacles 61a, 61b, and 61c in the captured images 42a to 42d. The indication objects 62a, 62b, and 62c are so-called bounding boxes.

Although the indication objects 62a, 62b, and 62c are frame-shaped objects surrounding the obstacles 61a, 61b, and 61c in this example, the indication objects 62a, 62b, and 62c are not limited to this mode. Alternatively, for example, objects displayed in other manners, such as elliptical objects surrounding the obstacles 61a, 61b, and 61c or arrow-shaped objects pointing at the obstacles 61a, 61b, and 61c, may be used as the indication objects.

The target object 56a on the sensing map 41 corresponds to the obstacle 61a, the target object 56b corresponds to the obstacle 61b, and the obstacle 61c corresponds to the target object 56c. That is, the target object 56a indicates the obstacle 61a, the target object 56b indicates the obstacle 61b, and the target object 56c indicates the obstacle 61c. In addition, the controller 31 causes the target objects 56a to 56c and the indication objects 62a to 62c corresponding to the same obstacles 61a to 61c to be displayed in the same manners, such as in the same colors or patterns (causes the display colors or patterns to match).

The controller 31 extracts distances to the obstacles 61a, 61b, and 61c from the detection information from the laser sensor 25a and the ultrasonic sensor 25b included in the sensing information from the sensors 25, and changes the manner in which each of the indication objects 62a, 62b, and 62c is displayed based on the distances to the obstacles 61a, 61b, and 61c. More specifically, the controller 31 emphasizes the displayed indication objects 62a, 62b, and 62c more strongly as the distances to the obstacles 61a, 61b, and 61c surrounded by the indication objects 62a, 62b, and 62c become smaller.

In addition, the controller 31 displays the indication objects 62a, 62b, and 62c in the captured images 42a to 42d in modes corresponding to relative positions of the obstacles 61a, 61b, and 61c surrounded by the indication objects 62a, 62b, and 62c with respect to the emergency stop zone 52 and the warning zone 53.

For example, the controller 31 changes colors, luminance, brightness, saturation, sizes, shapes, or the like of the indication objects 62a and 62b in such a way as to emphasize the displayed indication object 62a indicating the obstacle 61a at a distance from the working machine 1 corresponding to the emergency stop zone 52 over the displayed indication object 62b indicating the obstacle 61b at a distance corresponding to the warning zone 53. The controller 31 also changes colors, luminance, brightness, saturation, sizes, shapes, or the like of the indication objects 62b and 62c in such a way as to emphasize the displayed indication object 62b indicating the obstacle 61b at a distance from the working machine 1 corresponding to the warning zone 53 over the displayed indication object 62c indicating the obstacle 61c at a distance corresponding to the outer zone 54.

Since the distance from the working machine 1 becomes smaller in order of the obstacles 61c, 61b, and 61a in the example in FIG. 4, the controller 31 displays the corresponding indication objects 62c, 62b, and 62a such that display colors become more vivid or luminance becomes higher in order of the indication objects 62c, 62b, and 62a. For example, the controller 31 may display the indication object 62a in red, the indication object 62b in green (or yellow), and the indication object 62c in black (or green).

In addition, if the obstacle 61b shown in the captured image 42a is hidden behind a portion of the working machine 1 such as a pillar, that is, if the obstacle 61b is located in a blind spot of the cameras 25c, the controller 31 estimates a position of the obstacle 61b in the captured image 42a based on the detection information from the laser sensor 25a and the ultrasonic sensor 25b, and displays the indication object 62b in the captured image 42a in accordance with the estimated position of the obstacle 61b. At this time, the controller 31 superimposes the indication object 62b upon the portion of the working machine 1 shown in the captured image 42a. The controller 31 also displays a message 45a indicating that the obstacle is located forward and in a blind spot in the window 45 without superimposing the message 45a upon the sensing map 41, the captured images 42a to 42d, and the windows 43 and 44 of the remote monitoring screen 40.

With respect to each of the other captured images 42b to 42d, too, the controller 31 estimates a position of the obstacle hidden behind a portion of the working machine 1 and displays the indication object in the captured image 42a in accordance with the estimated position of the obstacle. In addition, when an obstacle is hidden behind a portion of the working device 2 coupled to the working machine 1 shown in the captured images 42a to 42d, too, the controller 31 estimates a position of the obstacle, displays an indication object in accordance with the estimated position of the obstacle, and displays a message indicating that the obstacle is located in a blind spot in the window 45.

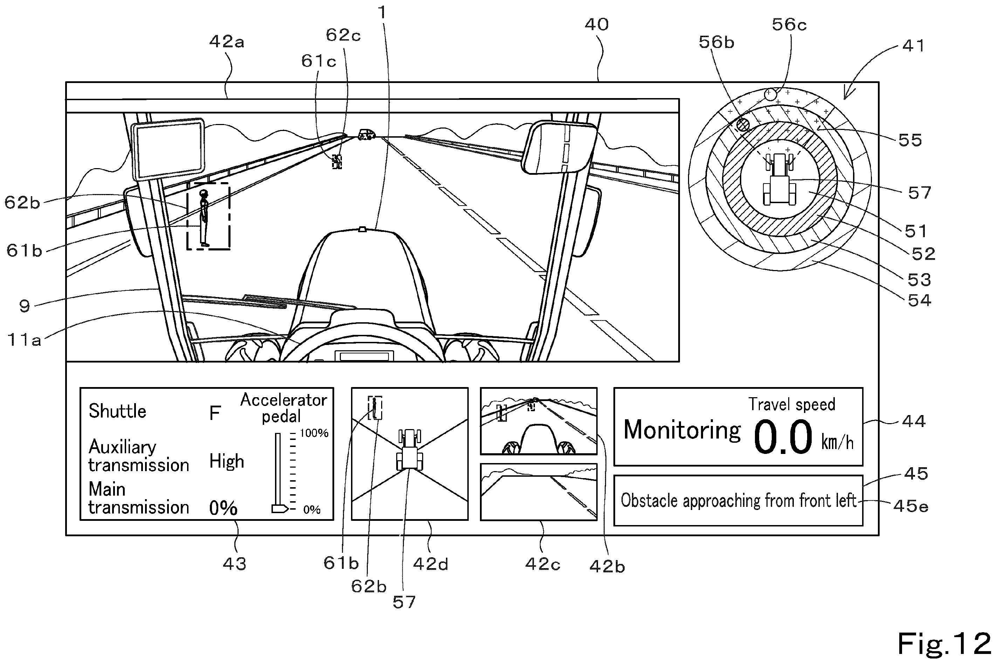

In addition, if the obstacle 61b is in the warning zone 53 but there is no obstacle in the emergency stop zone 52 as illustrated in FIG. 12, the controller 31 may display a message 45e for warning of the obstacle approaching the working machine 1 in the window 45. The message 45e also indicates that the obstacle is approaching from the front left.

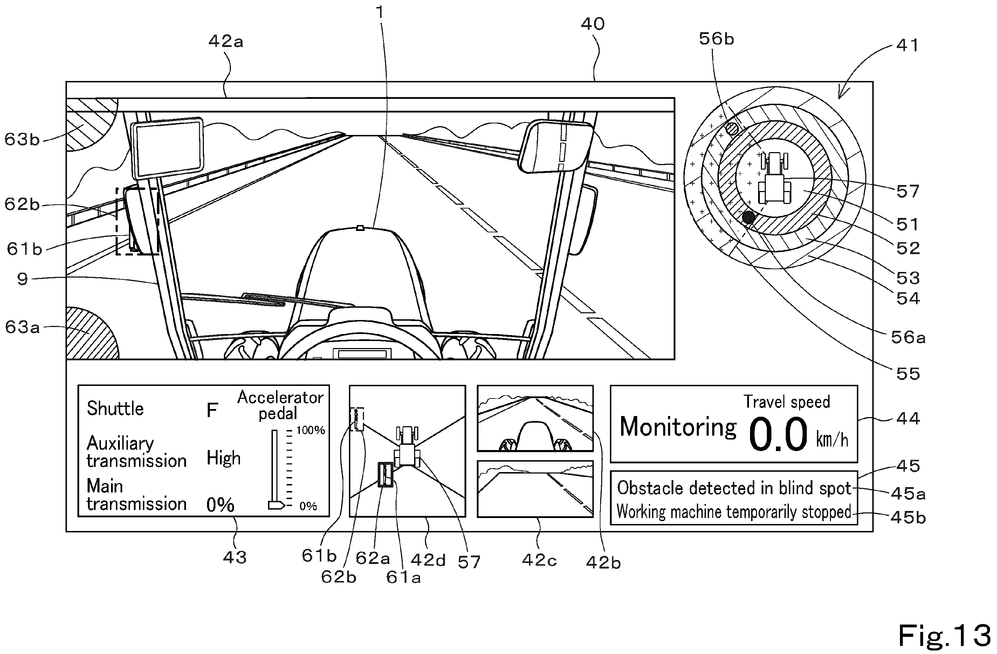

The controller 31 also determines directions from which obstacles are approaching the working machine 1 based on the detection information from the laser sensor 25a and the ultrasonic sensor 25b included in the sensing information from the sensors 25. As illustrated in FIG. 13, for example, the controller 31 displays notification objects 63a and 63b notifying of the approach of the obstacles 61a and 61b at positions in the periphery of the captured image 42a corresponding to the directions from which the obstacles 61a and 61b are approaching.

Although the obstacle 61a is approaching from the rear left of the working machine 1 and the obstacle 61b is approaching from the front left in the example in FIG. 13 as shown in the captured image 42d, these obstacles 61a and 61b are in a blind spot and not entirely shown in the captured images 42a to 42c. The controller 31, therefore, displays the fan-shaped notification object 63a notifying of the approach of the obstacle 61a at a lower-left corner of the captured image 42a whose display area is the largest and the fan-shaped notification object 63b notifying of the approach of the obstacle 61b at an upper-left corner of the captured image 42a.

Note that, as shown in the captured image 42a in FIG. 13, if the actually existing obstacle 61b is hidden behind a structure (e.g., a left pillar) of the working machine 1 in the captured image 42a and invisible, a notification object 63b notifying of the approach of the obstacle 61b may be displayed.

In addition, the controller 31 changes the manner in which each of the notification objects 63a and 63b is displayed based on the distances from the working machine 1 to the corresponding obstacles 61a and 61b. For example, the controller 31 changes colors, luminance, brightness, saturation, sizes, shapes, or the like of the notification objects 63a and 63b in such a way as to emphasize the displayed notification object 63a corresponding to the obstacle 61a at a distance from the working machine 1 corresponding to the emergency stop zone 52 over the displayed notification object 63b corresponding to the obstacle 61b at a distance corresponding to the warning zone 53.

The controller 31 may display the notification object 63a in red and the notification object 63b in green (or yellow). In addition, when an obstacle is approaching from directly behind or directly from the side (left or right) of the working machine 1, for example, the controller 31 may display a semicircular notification object or the like at the center of a lower edge, a left edge, or a right edge of the captured image 42a corresponding to the direction from which the obstacle is approaching. In addition, the controller 31 may display a notification object corresponding to an obstacle at a distance corresponding to the outer zone 54 in the periphery of the captured image 42a.

The controller 31 displays the states of the working machine 1 detected by the state detector 26 in the windows 43 and 44 of the remote monitoring screen 40. In the examples in FIGS. 4 and 12, the window 43 indicates that the travel direction of the traveling devices 7 has been switched to forward travel ("Shuttle: F"), auxiliary transmission of the transmission 5 has been shifted to a high-speed position ("Auxiliary transmission: High"), a state of main transmission (continuously variable transmission) is 0% ("Main transmission: 0%"), and the amount of operation of the accelerator pedal is 0% (a scale and a cursor of the accelerator).

In addition, the window 44 indicates that the position detector 24, the state detector 26, and the sensors 25 are monitoring the working machine 1 and the surrounding area of the working machine 1 ("Monitoring") and the travel speed of the working machine 1 (vehicle body 3) is 0.0 km/h (i.e., a stationary state).

The information displayed in the windows 43 and 44 is not limited to the states of the working machine 1, and the controller 31 may display other states of the working machine 1 in the windows 43 and 44. The number of windows 43 and 44 is not limited two, and may be one, or three or more. In addition, the controller 31 may display not only the states of the working machine 1 but also whether the working device 2 is coupled to the working machine 1, the type and attitude of the working device 2, and the like in the windows of the remote monitoring screen 40 based on the detection information from the state detector 26.

When the operator inputs an operation instruction such as the travel of the working machine 1 using the manual operator 35 of the remote apparatus 30, the controller 31 transmits a remote control signal corresponding to the operation instruction to the working machine 1 using the communicator 33 (S5: YES in FIG. 3) and transmits a request signal to the working machine 1 using the communicator 33 (S1).

Upon receiving the remote control signal using the in-vehicle communicator 23, the in-vehicle controller 21 of the working machine 1 controls the travel of the working machine 1 and the like based on the remote control signal, the detection information from the position detector 24 and the state detector 26, and the sensing information from the sensors 25. In addition, as described above, upon receiving the request signal using the in-vehicle communicator 23 (S11), the in-vehicle controller 21 transmits the detection information from the position detector 24 and the state detector 26 and the sensing information from the sensors 25 to the remote apparatus 30 using the in-vehicle communicator 23 (S12).

Upon receiving the detection information and the sensing information from the working machine 1 using the manual operator 35 of the remote apparatus 30 (S2), the controller 31 performs the processing in steps S3 and S4 as described above. As a result, the display content of the sensing map 41, the captured images 42a to 42d, and the windows 43 to 45 of the remote monitoring screen 40 displayed on the display 34 is updated.

If it is detected, based on the sensing information from the sensors 25, that an obstacle enters the emergency stop zone 52 while the working machine 1 is traveling under the remote control performed using the remote apparatus 30, the in-vehicle controller 21 automatically performs an emergency stop of the travel of the working machine 1 to avoid contact between the working machine 1 and the obstacle (S13: YES). The in-vehicle controller 21 then transmits the detection information from the position detector 24 and the state detector 26 and the sensing information from the sensors 25 to the remote apparatus 30 using the in-vehicle communicator 23 (S12). At this time, the sensing information from the sensors 25 transmitted to the remote apparatus 30 includes information indicating that an obstacle has been detected in the emergency stop zone 52, and the detection information from the state detector 26 includes information indicating that an emergency stop of the travel of the working machine 1 has been performed.

Upon checking, based on the sensing information from the sensors 25 and the detection information from the state detector 26 received by the communicator 33 in step S2, that an obstacle has been detected in the emergency stop zone 52 and an emergency stop of the travel of the working machine 1 has been performed, the controller 31 of the remote apparatus 30 displays, in the window 45 of the remote monitoring screen 40, a message 45b indicating that the working machine 1 has been stopped temporarily (or has come to an emergency stop) as illustrated in FIG. 4.

In addition, while the working machine 1 is traveling under the remote control performed using the remote apparatus 30, the operator might view at least one of the sensing map 41 and the captured images 42a to 42d of the remote monitoring screen 40 and input a stop instruction for stopping the travel of the working machine 1 using the manual operator 35 to, for example, avoid contact between the working machine 1 (or the working device 2) and an obstacle.

In this case, the controller 31 transmits a remote control signal corresponding to the instruction to stop the travel of the working machine 1 using the communicator 33 (S5: YES in FIG. 3), and further transmits a request signal using the communicator 33 (S1). Upon receiving the remote control signal corresponding to the stop instruction using the in-vehicle communicator 23, the in-vehicle controller 21 of the working machine 1 stops the travel of the working machine 1, and upon further receiving the request signal using the in-vehicle communicator 23 (S11), the in-vehicle controller 21 transmits the detection information from the position detector 24 and the state detector 26 and the sensing information from the sensors 25 using the in-vehicle communicator 23 (S12).

In addition, when the working machine 1 is stationary (when the travel speed is 0.0 km/h), the controller 31 may determine whether there is an obstacle in the inner zone 51 or the emergency stop zone 52 based on the sensing map 41. If there is no obstacle in the inner zone 51 or the emergency stop zone 52, the controller 31 may, when the operator inputs a travel instruction for the working machine 1 using the manual operator 35, receive the travel instruction and transmit a remote control signal corresponding to the travel instruction to the working machine 1.

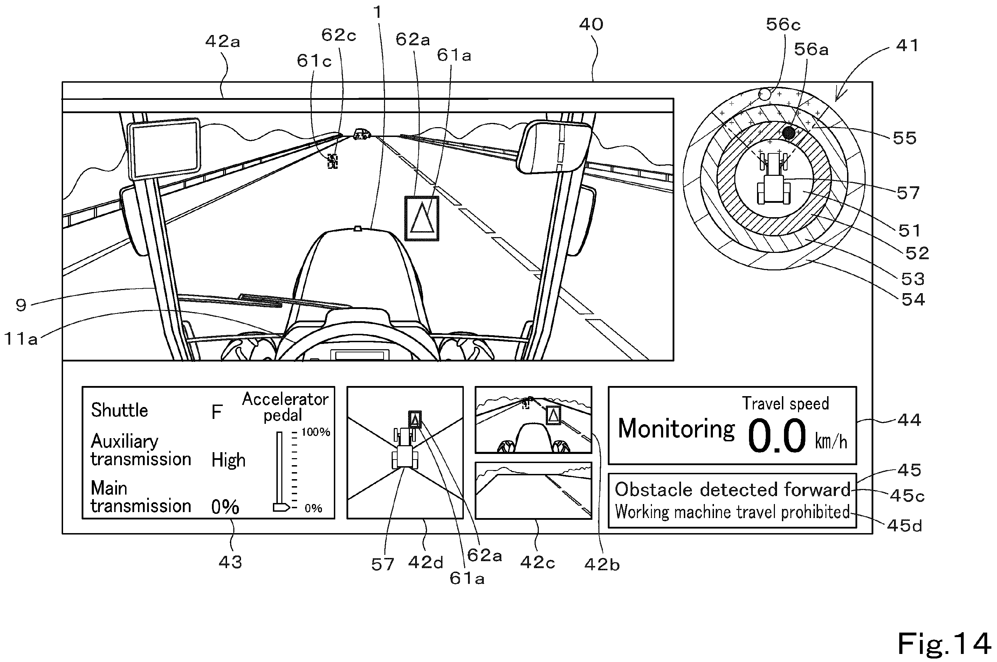

If there is an obstacle in the inner zone 51 or the emergency stop zone 52, on the other hand, the controller 31 may, even when the operator inputs a travel instruction for the working machine 1 using the manual operator 35, reject the travel instruction and maintain the stationary state of the working machine 1. After rejecting the travel instruction in this manner, the controller 31 may, as illustrated in FIG. 14, for example, display a message 45c indicating that an obstacle has been detected forward and a message 45d indicating that the travel of the working machine 1 is prohibited in the window 45 of the remote monitoring screen 40.

Even when an emergency stop of the working machine 1 is automatically performed or the remote apparatus 30 rejects an input travel instruction in accordance with detection, by the sensors 25, of an obstacle in the emergency stop zone 52 or the inner zone 51, the detection by the sensors 25 might be incorrect, or there might be no risk of contact between the obstacle and the working machine 1. In this case, the operator may view at least one of the sensing map 41 and the captured images 42a to 42d displayed in the remote monitoring screen 40, determine that there is no risk, and input a predetermined stop cancel instruction using the manual operator 35 to cause the controller 31 to permit the travel of the working machine 1 under the remote control in accordance with the stop cancel instruction and receive a travel instruction.

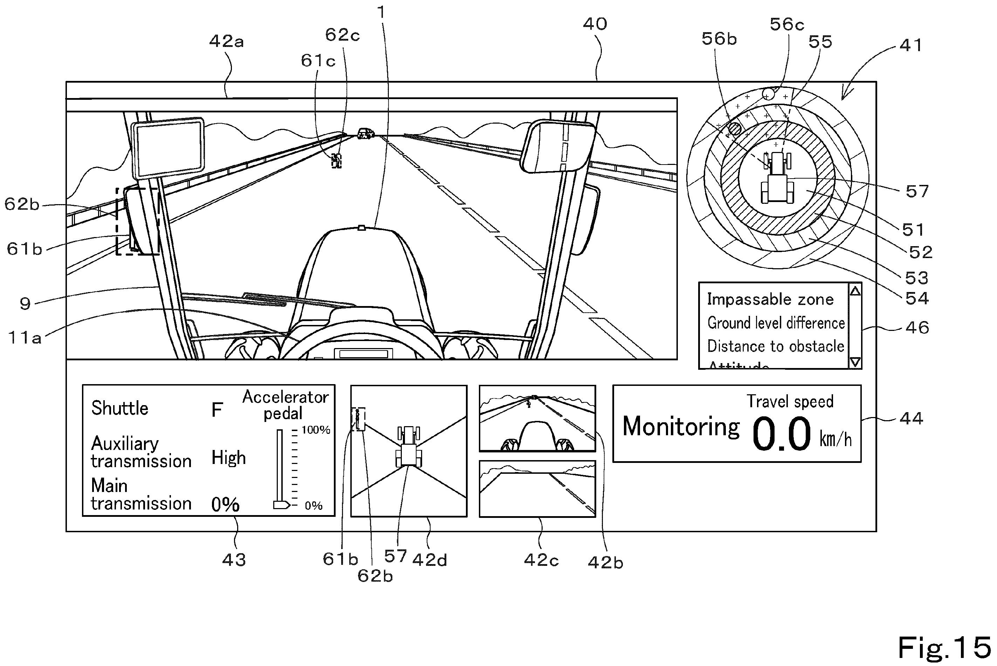

If the operator inputs an instruction to display additional information using the manual operator 35 while the display 34 is displaying the remote monitoring screen 40 (S6: YES in FIG. 3), the controller 31 displays an additional information menu 46 in a blank area of the remote monitoring screen 40 as illustrated in FIG. 15 (S7 in FIG. 3). The additional information menu 46 displays headlines of a plurality of pieces of additional information that can be additionally displayed in the remote monitoring screen 40. The plurality of pieces of additional information includes information based on the map information, such as impassable zones around the working machine and ground level differences, the sensing information such as the distances to the obstacles 61a to 61c, and the detection information from the state detector 26 such as the attitude of the working machine 1 and a travelable distance.

The operator operates the manual operator 35 and selects one of the pieces of additional information from the additional information menu 46 to input an instruction to display the piece of additional information (S8: YES in FIG. 3), and the controller 31 displays the piece of additional information in the remote monitoring screen 40 (S9).

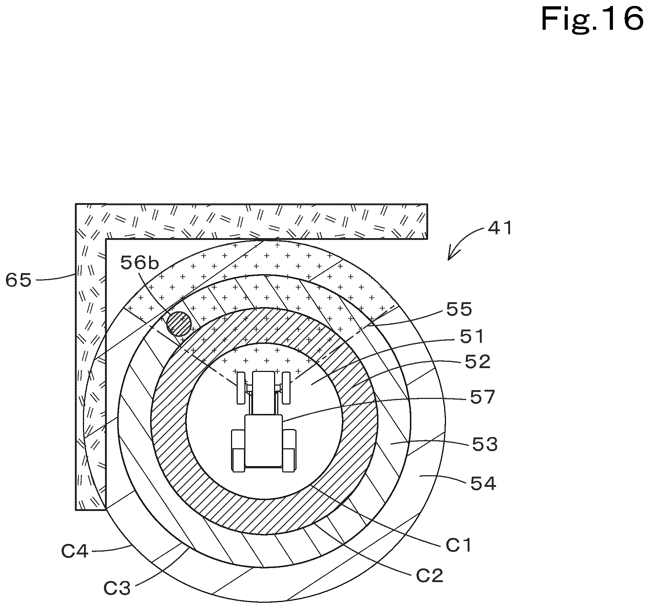

If the operator views the additional information menu 46 and inputs an instruction to display impassable zones, for example, the controller 31 detects, based on the map information regarding the surrounding area of the working machine 1, impassable zones where there is a cliff, a structure, or the like on which the working machine 1 cannot travel. The controller 31 then displays, on the sensing map 41 displayed in the remote monitoring screen 40, an impassable zone 65 in a mode different from those of the other zones 51 to 55 as illustrated in FIG. 16.

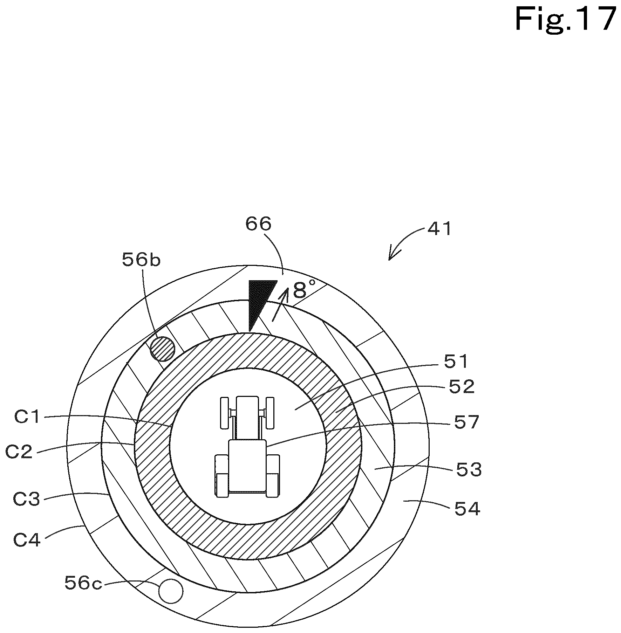

In addition, if the operator views the additional information menu 46 and inputs an instruction to display ground level differences, for example, the controller 31 detects ground level differences in the travel direction (forward) of the working machine 1 based on the map information regarding the surrounding area of the working machine 1. The controller 31 then displays a ground level difference 66 on the sensing map 41 displayed in the remote monitoring screen 40 as illustrated in FIG. 17. In the example in FIG. 17, the controller 31 displays a ground slope (ascending 8°) in the travel direction (forward direction) of the working machine 1 on the sensing map 41 as the ground level difference 66.

In another example, for example, the operator may set and input a target point on the sensing map 41 by operating the manual operator 35. The controller 31 may then detect, from the map information, a ground slope or a change in elevation from the current position of the working machine 1 to the target point, and superimpose the ground slope or the change in elevation upon a portion of the sensing map 41 or the additional information menu 46 as a graph or display the ground slope or the change in elevation in a blank area of the remote monitoring screen 40.

When an instruction to display a piece of additional information other than those described above is input using the manual operator 35, too, the controller 31 may display the piece of additional information on the sensing map 41, in the additional information menu 46, or in a blank area of the remote monitoring screen 40.

The operation of the remote apparatus 30 and the working machine 1 in FIG. 3 and the display of the remote monitoring screen 40 continue until the remote apparatus 30 is stopped (turned off).

Although the sensors 25 are provided for the working machine 1 in the above embodiment, sensors that sense the working machine 1 and the surrounding area of the working machine 1 may also be provided, for example, at a site (a road, an agricultural field, etc.) where the working machine 1 travels. In addition, in this case, for example, a communication interface that wirelessly communicates with the sensors may be provided, and sensing information from the sensors may be transmitted to the in-vehicle communicator 23 of the working machine 1 and the remote apparatus 30 using the communication interface.

The remote control assistance system 100 of the working machine and the remote apparatus 30 according to the present embodiment described above have the configurations described in the following items and produce effects.

[Item 1] According to one or more example embodiments, a remote control assistance system 100 for a working machine includes a sensor 25, and a remote apparatus 30 including a display 34 to display sensing information obtained through sensing by the sensor 25 and a controller 31 to control the display 34, wherein the controller 31 is configured or programmed to cause the display 34 to display a sensing map 41 indicating a surrounding area of the working machine 1 and a caution zone 52, 53 in the surrounding area and, when the sensing information includes a target 61a, 61b, 61c in the surrounding area of the working machine 1, cause the display 34 to display a target object 56a, 56b, 56c indicating a position of the target 61a, 61b, 61c on the sensing map 41.

With the configuration according to item 1, the operator can easily understand the positional relationship between the working machine 1 and the target object(s) 56a, 56b, and 56c by looking at the sensing map 41 displayed on the display 34. Furthermore, the operator can easily determine whether the target(s) 61a, 61b, and 61c corresponding to the target object(s) 56a, 56b, and 56c is/are in the caution zone 52, 53 in the surrounding area of the working machine 1, and can also easily recognize how distant the targets 61a, 61b, and 61c are from the working machine 1. It follows that the operator can easily remotely control the working machine 1 using the remote apparatus 30.

[Item 2] The remote control assistance system 100 according to item 1, wherein the controller 31 is configured or programmed to cause an emergency stop zone 52 and a warning zone 53 which are included in the caution zone 52, 53 to be displayed on the sensing map 41, the emergency stop zone 52 being configured such that the working machine 1 makes an emergency stop when a predetermined target (obstacle) is present in the emergency stop zone 52, the warning zone 53 being configured such that a warning indicating that the predetermined target is approaching the working machine 1 is issued when the predetermined target (object) is present in the warning zone, and change a manner in which the target object 56a, 56b, 56c is displayed, based on whether the target object 56a, 56b, 56c is in the emergency stop zone 52, in the warning zone 53, or outside the emergency stop zone 52 and the warning zone 53 (in an outer zone 54).

With the configuration according to item 2, the operator can easily determine whether the target(s) 61a to 61c corresponding to the target object(s) 56a to 56c is/are in the emergency stop zone 52 or the warning zone 53 in the surrounding area of the working machine 1 or the zone 54 outside the zones 52 and 53 at a glance. In particular, in the present example embodiment, the emergency stop zone 52, the warning zone 53, and the outer zone 54 are sequentially arranged in a direction away from the working machine 1, and whether the target(s) 61a to 61c is/are at position(s) dangerous to the working machine 1 can be easily recognized at a glance.

[Item 3] The remote control assistance system 100 according to item 2, wherein the controller 31 is configured or programmed to cause the target object 56b in the warning zone 53 to be displayed in a more emphasized manner than the target object 56c outside the emergency stop zone 52 and the warning zone 53, and cause the target object 56a in the emergency stop zone 52 to be displayed in a more emphasized manner than the target object 56b in the warning zone 53.

With the configuration according to item 3, the operator can cautiously perform the remote control of the working machine 1 using the remote apparatus 30 while paying more attention to the position of a target in a highly dangerous zone than the position of a target in a less dangerous zone.

[Item 4] The remote control assistance system 100 according to any one of items 1 to 3, wherein a plurality of the sensors 25 are provided in or on the working machine 1 and include a plurality of target sensors 25a, 25b (laser sensor(s) 25a, ultrasonic sensor(s) 25b) to detect targets 61a, 61b, 61c located forward of, rearward of, leftward of, and rightward of the working machine 1, and the controller 31 is configured or programmed to cause at least one target object 56a, 56b 56c indicating at least one position of at least one target 61a, 61b, 61c detected by at least one of the target sensors 25a, 25b to be displayed on the sensing map 41, and cause at least one monitored area 55 of at least one of the target sensors 25a, 25b that has detected at least one target 61a, 61b, 61c to be displayed on the sensing map 41.

With the configuration according to item 4, the operator can know whether the target sensor(s) 25a and 25b have correctly detected the target(s) 61a, 61b, and 61c.

[Item 5] The remote control assistance system 100 according to any one of items 1 to 4, further including a detector 24, 26 (position detector 24, state detector 26) to detect a state of the working machine 1, wherein the controller 31 is configured or programmed to change a manner in which the caution zone 52, 53 is displayed based on a travel speed of the working machine 1 detected by the detector 24, 26.

With the configuration according to item 5, the operator can easily understand the positional relationship between the caution zone(s) 52 and 53 and the target(s) 61a to 61c according to the travel speed of the working machine 1. In particular, in an example embodiment, because the caution zone(s) 52 and 53 is/are enlarged as the travel speed of the working machine 1 increases, the operator can know whether the target(s) 61a to 61c is/are likely to enter the caution zone(s) 52 and 53.

[Item 6] The remote control assistance system 100 according to any one of items 1 to 5, wherein the controller 31 is configured or programmed to change a manner in which the caution zone 52, 53 is displayed based on specifications of a working device 2 coupled to the working machine 1.

With the configuration according to item 6, the operator can easily understand the positional relationship between the caution zone(s) 52 and 53 and the target(s) 61a to 61c according to the specifications of the working device 2. In particular, in an example embodiment, because the caution zone(s) 52 and 53 is/are enlarged as the external size of the working device 2 increases, the operator can easily understand the positional relationship between the working device 2 and the target(s) 61a to 61c.

[Item 7] The remote control assistance system 100 according to any one of items 1 to 6, wherein the controller 31 is configured or programmed to cause the caution zone 52, 53, which is present in a direction of travel of the working machine 1 detected by the detector 24, 26 to be displayed on the sensing map 41.

With the configuration according to item 7, the operator can easily understand, at a glance, the position(s) of the target(s) 61a to 61c relative to the working machine 1 and the caution zone(s) 52 and 53 in the case where the working machine 1 is traveling under remote control.

[Item 8] The remote control assistance system 100 according to item 7, wherein the controller 31 is configured or programmed to change a position at which the caution zone 52, 53 is displayed based on a steering angle θ of the working machine 1 detected by the detector 26.

With the configuration according to item 8, the operator can easily understand the position(s) of the target(s) 61a to 61c in the direction of travel of the working machine 1 relative to the working machine 1 and the caution zone(s) 52 and 53 at a glance.

[Item 9] The remote control assistance system 100 according to any one of items 1 to 8, wherein the controller 31 is configured or programmed to predict a position of the working machine 1 at a future time after a predetermined time period based on a travel direction and a travel speed of the working machine 1 detected by the detector 24, 26, and cause a predicted working machine object 59a, 59b indicating the predicted position of the working machine 1 at the future time after the predetermined time period and an actual working machine object 57 indicating a current position of the working machine 1 to be displayed on the sensing map 41.

With the configuration according to item 9, the operator can easily know the positional relationship between the working machine 1 and the target(s) 61a to 61c at a future time after the predetermined time period at a glance.

[Item 10] The remote control assistance system 100 according to any one of items 1 to 9, wherein the sensor 25 includes an imager 25c to capture an image of the surrounding area of the working machine 1, and the controller 31 is configured or programmed to cause the display 34 to display an image 42a to 42d captured by the imager 25c and the sensing map 41 on a screen (remote monitoring screen) 40.

With the configuration according to item 10, the operator can easily visually recognize the sensing map 41 and the captured image(s) 42a to 42d of the surrounding area of the working machine 1 by looking at the remote monitoring screen 40, and can more accurately know the positional relationship between the working machine 1 and the target(s) 61a to 61c. Furthermore, since the sensing map 41 and the captured image(s) 42a to 42d are displayed together on the remote monitoring screen 40, it is possible to reduce the amount of movement of the operator's line of sight when the operator looks at the sensing map 41 and the captured image(s) 42a to 42d, and possible to reduce the operator's burden in monitoring.

[Item 11] The remote control assistance system 100 according to item 10, wherein the imager 25c includes a plurality of cameras provided in or on the working machine 1 to capture images of areas forward of, rearward of, leftward of, and rightward of the working machine 1, and the controller 31 is configured or programmed to cause the display 34 to display at least one of (i) a plurality of captured images captured by the respective plurality of cameras 25c or (ii) a composite image 42d obtained by combining the plurality of captured images and indicating an overhead view of the surrounding area of the working machine 1.

With the configuration according to item 11, the operator can easily recognize targets forward of, rearward of, leftward of, and rightward of the working machine 1. In particular, in the present example embodiment, since the plurality of captured images 42a to 42c of areas in a plurality of directions of the working machine 1 and the composite captured image 42d indicating the overhead view of the surrounding area of the working machine 1 are displayed on the remote monitoring screen 40, the operator can even more accurately know the positional relationship between the working machine 1 and the targets 61a to 61c.

[Item 12] The remote control assistance system according to item 10 or 11, wherein the imager 25c includes an internal camera 25c1 provided inside a cabin 9 of the working machine 1 to capture an image of an area forward of the working machine 1, and the controller 31 is configured or programmed to cause the display 34 to display the image 42a captured by the internal camera 25c1.

With the configuration according to item 12, the operator can easily recognize the target(s) 61a to 61c forward of the working machine 1 with the line of sight of a driver seated in the operator's seat 10 of the working machine 1, and can easily remotely control the working machine 1 using the remote apparatus 30 as if the operator were in the working machine 1.

[Item 13] The remote control assistance system 100 according to any one of items 10 to 12, wherein the sensor 25 includes a target sensor 25a, 25b to detect a distance from the working machine 1 to the target 61a, 61b, 61c, and the controller 31 is configured or programmed to cause an indication object 62a, 62b, 62c indicating the target 61a, 61b, 61c shown in the captured image 42a to 42d to be displayed and change a manner in which the indication object 62a, 62b, 62c is displayed based on the distance to the target 61a, 61b, 61c.

With the configuration according to item 13, the operator can recognize each target 61a, 61b, or 61c around the working machine 1 in accordance with the distance from the working machine 1.

[Item 14] The remote control assistance system 100 according to item 13, wherein the controller 31 is configured or programmed to cause the indication object 62a, 62b, 62c to be displayed in a more emphasized manner as the distance to the target 61a, 61b, 61c indicated by the indication object 62a, 62b, 62c decreases.

With the configuration according to item 14, the operator can pay more attention to the dangerous target 61a (or the target 61b) close to the working machine 1 than the far target 61c.

[Item 15] The remote control assistance system 100 according to item 13 or 14, wherein the controller 31 is configured or programmed to, when the target 61b is hidden behind a portion of the working machine 1 or a working device 2 coupled to the working machine 1 shown in the captured image 42a to 42d, estimate a position of the target 61b in the captured image 42a to 42d based on detection information from the target sensor 25a, 25b, and cause the indication object 62b to be displayed based on the estimated position of the target 61b.

With the configuration according to item 15, the operator can easily recognize the target 61b in a blind spot an image of which cannot be captured by the imager (camera) 25c.

[Item 16] The remote control assistance system 100 according to any one of items 10 to 15, wherein the controller 31 is configured or programmed to determine a direction from which the target 61a, 61b is approaching the working machine 1 based on detection information from the target sensor 25a, 25b, and cause a notification object 63a, 63b which provides a notification that the target 61a, 61b is approaching to be displayed at a position at a periphery of the captured image 42a to 42d that corresponds to the direction from which the target 61a, 61b is approaching, and change a manner in which the notification object 63a, 63b is displayed based on the distance to the target 61a, 61b.

With the configuration according to item 16, the operator can easily recognize that target(s) not shown in captured image(s) they are looking at is/are approaching the working machine 1.

[Item 17] The remote control assistance system 100 according to any one of items 1 to 16, wherein the controller 31 is configured or programmed to cause additional information based on map information regarding the surrounding area of the working machine 1 to be displayed on the sensing map 41.

With the configuration according to item 17, the operator can also recognize the additional information other than targets around the working machine 1.

[Item 18] The remote control assistance system 100 according to item 17, wherein the remote apparatus 30 includes an input interface (manual operator) 35 to receive input of an instruction to display at least one of a plurality of pieces of the additional information at least including an impassable zone 65 and a ground level difference 66 around the working machine 1, and the controller 31 is configured or programmed to cause the display 34 to display at least one of the pieces of additional information indicated by the instruction and the sensing map 41 on a screen 40.

With the configuration according to item 18, the operator can select additional information as desired and recognize the additional information along with the content displayed on the sensing map 41. Furthermore, since the selected additional information is displayed on the sensing map 41, the amount of movement of the operator's line of sight can be reduced, and the operator's burden in monitoring can be reduced. Furthermore, the operator can easily remotely control the working machine 1 while recognizing the target(s) 61a to 61c around the working machine 1, the impassable zone 65 or the ground level difference 66, and the like.

[Item 19] According to one or more example embodiments, a remote apparatus 30 is included in the remote control assistance system 100 according to any one of items 1 to 18, and is configured as described in any one of items 1 to 18.

While embodiments of the present invention have been described above, it is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

1 working machine
2 working device
9 cabin
10 operator's seat
24 position detector (detector)
25 sensors
25a laser sensor (target sensor)
25b ultrasonic sensor (target sensor)
25c camera (imager)
25c1 internal camera (imager)
26 state detector (detector)
30 remote apparatus
31 controller
34 display
35 manual operator (input interface)
40 remote monitoring screen
41 sensing map
42a, 42b, 42c captured image
42d composite captured image
52 emergency stop zone (caution zone)
53 warning zone (caution zone)
55 monitored area
56a, 56b, 56c target object
57 actual working machine object
59a, 59b predicted working machine object
61a, 61b, 61c obstacle (predetermined target)
62a, 62b, 62c indication object
63a, 63b notification object
65 impassable zone (additional information)
66 ground level difference (additional information)
100 remote control assistance system for working machine
θ steering angle

## Claims

1. A remote control assistance system for a working machine, the remote control assistance system comprising:
a sensor; and
a remote apparatus including a display to display sensing information obtained through sensing by the sensor and a controller to control the display; wherein
the controller is configured or programmed to cause the display to display a sensing map indicating a surrounding area of the working machine and a caution zone in the surrounding area and, when the sensing information includes a target in the surrounding area of the working machine, cause the display to display a target object indicating a position of the target on the sensing map.

2. The remote control assistance system according to claim 1, wherein
the controller is configured or programmed to:
cause an emergency stop zone and a warning zone which are included in the caution zone to be displayed on the sensing map, the emergency stop zone being configured such that the working machine makes an emergency stop when a predetermined target is present in the emergency stop zone, the warning zone being configured such that a warning indicating that the predetermined target is approaching the working machine is issued when the predetermined target is present in the warning zone; and
change a manner in which the target object is displayed, based on whether the target object is in the emergency stop zone, in the warning zone, or outside the emergency stop zone and the warning zone.

3. The remote control assistance system according to claim 2, wherein
the controller is configured or programmed to cause the target object in the warning zone to be displayed in a more emphasized manner than the target object outside the emergency stop zone and the warning zone, and cause the target object in the emergency stop zone to be displayed in a more emphasized manner than the target object in the warning zone.

4. The remote control assistance system according to claim 1, wherein
a plurality of the sensors are provided in or on the working machine and include a plurality of target sensors to detect targets located forward of, rearward of, leftward of, and rightward of the working machine; and
the controller is configured or programmed to cause at least one monitored area of at least one of the target sensors that has detected at least one target to be displayed on the sensing map.

5. The remote control assistance system according to claim 1, further comprising:
a detector to detect a state of the working machine; wherein
the controller is configured or programmed to change a manner in which the caution zone is displayed based on a travel speed of the working machine detected by the detector.

6. The remote control assistance system according to claim 1, wherein
the controller is configured or programmed to change a manner in which the caution zone is displayed based on specifications of a working device coupled to the working machine.

7. The remote control assistance system according to claim 1, further comprising:
a detector to detect a state of the working machine; wherein
the controller is configured or programmed to cause the caution zone, which is present in a direction of travel of the working machine detected by the detector, to be displayed on the sensing map.

8. The remote control assistance system according to claim 7, wherein
the controller is configured or programmed to change a position at which the caution zone is displayed based on a steering angle of the working machine detected by the detector.

9. The remote control assistance system according to claim 1, further comprising:
a detector to detect a state of the working machine; wherein
the controller is configured or programmed to predict a position of the working machine at a future time after a predetermined time period based on a travel direction and a travel speed of the working machine detected by the detector, and cause a predicted working machine object indicating the predicted position of the working machine at the future time after the predetermined time period and an actual working machine object indicating a current position of the working machine to be displayed on the sensing map.

10. The remote control assistance system according to claim 1, wherein
the sensor includes an imager to capture an image of the surrounding area of the working machine; and
the controller is configured or programmed to cause the display to display an image captured by the imager and the sensing map on a screen.

11. The remote control assistance system according to claim 10, wherein
the imager includes a plurality of cameras provided in or on the working machine to capture images of areas forward of, rearward of, leftward of, and rightward of the working machine; and
the controller is configured or programmed to cause the display to display at least one of (i) a plurality of captured images captured by the respective plurality of cameras or (ii) a composite image obtained by combining the plurality of captured images and indicating an overhead view of the surrounding area of the working machine.

12. The remote control assistance system according to claim 10, wherein
the imager includes an internal camera provided inside a cabin of the working machine to capture an image of an area forward of the working machine; and
the controller is configured or programmed to cause the display to display the image captured by the internal camera.

13. The remote control assistance system according to claim 10, wherein
the sensor includes a target sensor to detect a distance from the working machine to the target; and
the controller is configured or programmed to cause an indication object indicating the target shown in the captured image to be displayed and change a manner in which the indication object is displayed based on the distance to the target.

14. The remote control assistance system according to claim 13, wherein
the controller is configured or programmed to cause the indication object to be displayed in a more emphasized manner as the distance to the target indicated by the indication object decreases.

15. The remote control assistance system according to claim 13, wherein
the controller is configured or programmed to, when the target is hidden behind a portion of the working machine or a working device coupled to the working machine shown in the captured image, estimate a position of the target in the captured image based on detection information from the target sensor, and cause the indication object to be displayed based on the estimated position of the target.

16. The remote control assistance system according to claim 10, wherein
the sensor includes a target sensor to detect a distance from the working machine to the target; and
the controller is configured or programmed to:
determine a direction from which the target is approaching the working machine based on detection information from the target sensor; and
cause a notification object which provides a notification that the target is approaching to be displayed at a position at a periphery of the captured image that corresponds to the direction from which the target is approaching, and change a manner in which the notification object is displayed based on the distance to the target.

17. The remote control assistance system according to claim 1, wherein
the controller is configured or programmed to cause additional information based on map information regarding the surrounding area of the working machine to be displayed on the sensing map.

18. The remote control assistance system according to claim 17, wherein
the remote apparatus includes an input interface to receive input of an instruction to display at least one of a plurality of pieces of the additional information at least including an impassable zone and a ground level difference around the working machine; and
the controller is configured or programmed to cause the display to display at least one of the pieces of additional information indicated by the instruction and the sensing map on a screen.

19. A remote apparatus included in the remote control assistance system according to any one of claims 1 to 18.
